(19) **Europäisches Patentamt**
**European Patent Office**
**Office européen des brevets**

(11) **EP 3 937 527 B1**

(12) **EUROPEAN PATENT SPECIFICATION**

(45) Date of publication and mention
of the grant of the patent:
**15.11.2023 Bulletin 2023/46**

(21) Application number: **20765828.7**

(22) Date of filing: **28.01.2020**

(51) International Patent Classification (IPC):
***H04W 16/14*** *(2009.01)* ***H04W 28/18*** *(2009.01)*
***H04W 28/24*** *(2009.01)*

(52) Cooperative Patent Classification (CPC):
**H04W 16/14;** H04W 28/24

(86) International application number:
**PCT/JP2020/002896**

(87) International publication number:
**WO 2020/179285 (10.09.2020 Gazette 2020/37)**

(54) **COMMUNICATION CONTROL DEVICE AND METHOD**

KOMMUNIKATIONSSTEUERUNGSVORRICHTUNG UND VERFAHREN

DISPOSITIF DE COMMANDE DE COMMUNICATION ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2019 JP 2019039759**

(43) Date of publication of application:
**12.01.2022 Bulletin 2022/02**

(73) Proprietor: **Sony Group Corporation
Tokyo 108-0075 (JP)**

(72) Inventor: **FURUICHI, Sho
Tokyo 108-0075 (JP)**

(74) Representative: **Witte, Weller & Partner
Patentanwälte mbB
Postfach 10 54 62
70047 Stuttgart (DE)**

(56) References cited:
**JP-A- 2015 534 372     JP-A- 2016 019 134
JP-A- 2017 517 218**

EP 3 937 527 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field

The present disclosure relates to a communication control device and a method.

Background

With recent increase and diversification of wireless or radio environments having a mixture of various radio systems and the volume of content transferred via radio communications, there has been a problem of depletion of radio resources (frequency/spectrum) available for allocation to the radio systems. Regarding this issue, many radio bands are already used by incumbent radio systems, making it difficult to allocate new radio resources. In view of such circumstances, in order to obtain available radio resources, there has been a demand for utilization (dynamic spectrum sharing referred to as Dynamic Spectrum Access (DSA)) of temporally and spatially vacant radio waves (referred to as a white space) in incumbent radio systems by utilization of cognitive radio technology.

In the recent United States, with the aim of opening a federal use band (3.55 - 3.70 GHz), which overlaps with a frequency band that is worldwide 3GPP bands 42 and 43, to the general public, legislation and standardization of a Citizens Broadband Radio Service (CBRS) utilizing a spectrum sharing technology are accelerating. For example, Non Patent Literature 1 discloses an overview of CBRS.

In addition, the cognitive radio technology can contribute not only to dynamic spectrum sharing referred to as dynamic spectrum access but also to improvement of spectrum use efficiency by a radio system. For example, ETSI EN 303 387 and IEEE 802.19.1-2014 include specifications of inter-radio system coexistence technology utilizing a database.

Citation List

Non Patent Literature

Non Patent Literature 1: CBRSA-TS-2001, "CBRS Coexistence Technical Specification V1.0.0," February 1, 2018, CBRS Alliance, [searched on February 22, 2019], Internet, <URL: https://www.cbrsalliance.org/wp-content/uploads/2018/05/CBRS-Coexistence-Technical-Specification.pdf>

JP 2015-534372 A (and the corresponding WO 2014/047235 A2) discloses methods and apparatus for shared access systems that may be used to allow operation in three-tiered shared spectrum architecture. For example, a Shared Spectrum Manager (SSM) may organize spectrum segments. The SSM may communicate with access users of different priority and may use message exchanges to request spectrum, bid for spectrum, manage spectrum, or the like. The SSM may manage admission of access users (allocation of spectrum to users) and operation with a spectrum request that may be provided as a range between a minimum (guaranteed) and maximum quality of operation. The SSM may also manage the way an access user may use the assigned spectrum. Inter-SSM communication may be used in regions where multiple SSMs may exist (e.g. country borders).

Further prior art can be found in JP 2016-019134 A and JP 2017-517218 A.

Summary

Technical Problem

In addition, in recent years, 5G NR has rapidly been attracting attention, and radio wave use mode that has centered on mobile broadband is expected to change significantly with the emergence of other various use cases.

In view of this trend, the present disclosure proposes a technology that enables spectrum sharing in a more suitable manner even in environments that assume application in various use cases.

Solution to Problem

According to the present disclosure, a communication control device and a method are provided as defined in the claims.

Brief Description of Drawings

FIG. 1 is a chart illustrating an example of a mode of spectrum use authorization.

FIG. 2 is a diagram illustrating an example of a schematic configuration of a system according to an embodiment of the present disclosure.

FIG. 3 is a diagram illustrating an overview of an example of a model when a plurality of communication control devices is dispersedly arranged.

FIG. 4 is a diagram illustrating an outline of an example of a model in which a part of the communication control devices 3 performs an integrated central control of a plurality of communication control devices.

FIG. 5 is a block diagram illustrating an example of a configuration of a communication device according to the embodiment.

FIG. 6 is a block diagram illustrating an example of a configuration of a terminal device according to the embodiment.

FIG. 7 is a diagram illustrating an example of groups into which users are classified for spectrum sharing.

FIG. 8 is a diagram illustrating an overview of the technology according to the embodiment.

FIG. 9 is a diagram illustrating an example of a method of defining a nested tier.

FIG. 10 is a diagram illustrating another example of a method of defining a nested tier.

FIG. 11 is a diagram illustrating another example of a method of defining a nested tier.

FIG. 12 is a diagram illustrating another example of a method of defining a nested tier.

FIG. 13 is a functional block diagram illustrating an example of a schematic functional configuration of a communication control device according to the embodiment.

FIG. 14 is a functional block diagram illustrating an example of a schematic functional configuration of the communication control device according to the embodiment.

FIG. 15 is a functional block diagram illustrating another example of the functional configuration of the system according to the embodiment.

FIG. 16 is a functional block diagram illustrating another example of the functional configuration of the system according to the embodiment.

FIG. 17 is a functional block diagram illustrating another example of the functional configuration of the system according to the embodiment.

FIG. 18 is a block diagram illustrating an example of a schematic configuration of a server.

FIG. 19 is a block diagram illustrating a first example of a schematic configuration of an eNB.

FIG. 20 is a block diagram illustrating a second example of a schematic configuration of an eNB.

FIG. 21 is a block diagram illustrating an example of a schematic configuration of a smartphone.

FIG. 22 is a block diagram illustrating an example of a schematic configuration of a car navigator.

Description of Embodiments

Hereinafter, preferred embodiments of the present disclosure will be described in detail with reference to the accompanying drawings. In the present specification and the drawings, components having substantially the same functional configuration will be denoted with the same reference numerals and redundant description will be omitted.

Note that the description will be provided in the following order.

1. Introduction
2. Representative scenario assumed in present disclosure

    2.1. System model
    2.1.1. Configuration example of communication device
    2.1.2. Configuration example of terminal device
    2.2. Terms related to spectrum sharing

3. Description of various procedures

    3.1 Registration procedure
    3.1.1 Details of required parameters
    3.1.1.1 Supplement of required parameters
    3.1.2 Details of registration process
    3.2 Available spectrum query procedure
    3.3 Spectrum grant procedure
    3.4 Spectrum use notification/heartbeat
    3.5 Supplement to various procedures
    3.6 Various procedures regarding terminal

3.7 Procedure occurring between communication control devices
3.7.1 Information exchange
3.7.2 Command/Request Procedures

4. Exemplary embodiments of present disclosure

4.1. Overview of nested hierarchical spectrum access
4.1.1. Example of defining method according to acceptable interference level
4.1.2. Example of defining method based on different QoS requirements
4.1.3. Example of defining method based on wireless application
4.1.4. Example of defining method based on spectrum leasing
4.2. Example of secondary system control method based on nested tier
4.3. Example of functional configuration for nested tier based control
4.4. Example of application to frequency band

5. Application examples

5.1. Application examples related to server
5.2. Application examples related to base station
5.3. Application examples related to terminal devices

6. Conclusion

<<1. Introduction>>

In recent years, 5G NR has rapidly been attracting attention. Exemplary characteristic configurations of the 5G NR regarding a radio access network (RAN) side include: enhanced mobile broadband (eMBB); massive Machine Type Communications (mMTC); and Ultra Reliable and Low Latency Communications (URLLC). Also on the core network side, for example, a technology of "virtualization" represented by network slicing or the like has attracted attention. With this background, after the spread of the 5G NR, the conventional radio wave use mode that has centered on mobile broadband is expected to change significantly with an emergence of other various use modes.

On the other hand, the demand for use of the sub-6 GHz band is expected to increase as before, together with an increase of the use of the millimeter wave. Therefore, spectrum scarcity is considered to continue in the future, leading to accelerated spectrum sharing.

Conventionally, discussions assuming 4G LTE, particularly mobile broadband applications, have been made in the CBRS Alliance, for example. Unlike a conventional licensed band or a Priority Access Tier of the same CBRS, a user (communication operator) of General Authorized Access (GAA) in the CBRS might suffer interference from other GAA users. Therefore, the CBRS Alliance defines requirements for coexistence between radio devices in the GAA tier in Literature 1 described below, for example. Unfortunately, however, as described above, attention is paid, in the specification, to the requirements assuming the mobile broadband application, making it difficult to achieve the coexistence of various use cases having different QoS requirements.

· Literature 1: CBRSA-TS-2001 CBRS Coexistence Technical Specification V1.0.0, February 1, 2018

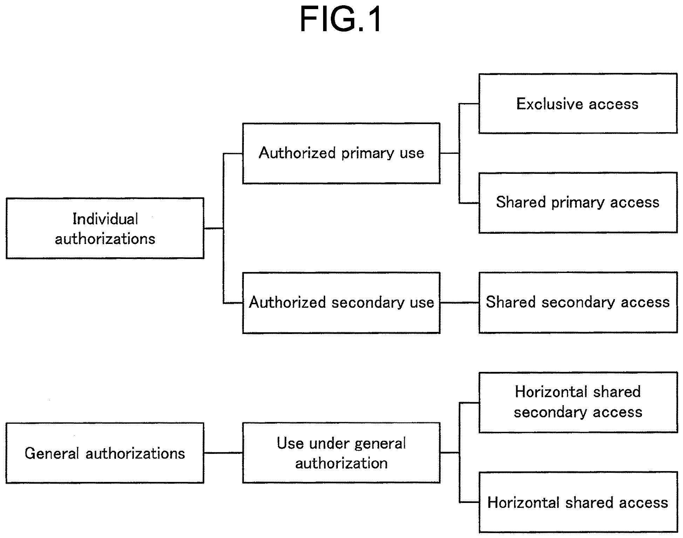

Furthermore, not limited to the CBRS, the above-described problem can be generalized as illustrated in FIG. 1. FIG. 1 is a chart illustrating an example of a mode of spectrum use authorization. For example, GAA corresponds to "Horizontal shared secondary access". Another example of "horizontal shared secondary access" includes TV White Space. In addition, the Priority Access Tier in the CBRS corresponds to "Shared secondary access". As another example, exclusive access corresponds to a conventional licensed band, a TV broadcaster, or the like, and horizontal shared access corresponds to a wireless LAN, Bluetooth (registered trademark), or the like. That is, from the viewpoint of spectrum sharing, the above-described problem might occur in "Shared secondary access" and "Horizontal shared secondary access".

In view of the above circumstances, the present disclosure provides a new spectrum sharing mechanism to deal with the above problem.

<<2. Representative Scenario Assumed in Present Disclosure>>

<2.1. System Model>

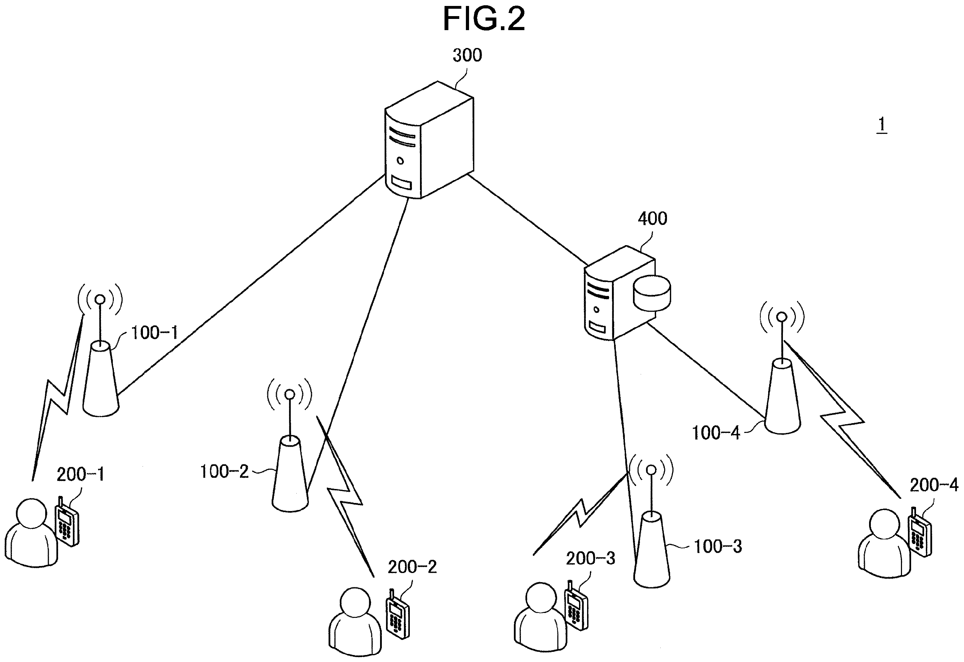

First, an example of a schematic configuration of a system (referred to as a system model) according to an embodiment of the present disclosure will be described with reference to FIG. 2. FIG. 2 is a diagram illustrating an example of a schematic configuration of a system according to the present embodiment. As illustrated in FIG. 2, a system 1 according to the present embodiment includes communication devices 100 (for example, communication devices 100-1 to 100-4), terminal devices 200 (for example, terminal devices 200-1 to 200-4), and a communication control device 300. The system 1 may also include a network manager 400.

The communication device 100 is typically a device corresponding to a radio base station (also referred to as Base Station, Node B, eNB, gNB, or the like) or a radio access point. The communication device 100 may be a radio relay station. Furthermore, the communication device 100 may be an optical link device referred to as a remote radio head (RRH).

The communication device 100 does not necessarily have to be a statically installed device, and may be a device installed in a moving body such as an automobile, for example. Furthermore, the communication device 100 need not exist on the ground, and may be a device having a communication function on an object existing in the air or space, such as an aircraft, a drone, a helicopter, a satellite, or the like. Furthermore, the communication device 100 may be a device having a communication function on an object existing on the sea or under the sea, such as a ship or a submarine. In such a case, the communication device 100 can perform radio communication with another communication device which is statically installed.

The coverage provided by the communication device 100 can be allowed to have various sizes from a relatively large coverage such as a macro cell to a small coverage such as a pico cell. Furthermore, one cell may be formed by a distributed antenna system (DAS) and a plurality of communication devices 100. Furthermore, in a case where the communication device 100 has a function referred to as beamforming, a cell or a service area may be formed for each of beams.

The communication device 100 can be used, operated, or managed by various entities. Examples of entities include: a mobile network operator (MNO); a mobile virtual network operator (MVNO); a mobile virtual network enabler (MVNE); a neutral host network (NHN) operator; an enterprise; an educational institution (incorporated educational institutions, boards of education of local governments, or the like); a real estate (building, apartment, or the like) administrator; or an individual. The above is merely an example, and the application destination of the technology according to the present disclosure is not limited. Furthermore, the communication device 100 may be a piece of shared equipment used by a plurality of business operators or a plurality of individuals. In addition, installation and operation of the equipment may be performed by a third party different from the user.

The communication device 100 operated by the company can typically be connected to various networks such as the Internet via a core network. Furthermore, operation management and maintenance of the communication device 100 can be performed by a function referred to Operation, Administration & Maintenance (OA & M), for example. Furthermore, for example, there may be provided a network manager 400 that integrally controls the communication device 100 in the network.

The terminal device 200 (also referred to as User Equipment, User Terminal, User Station, Mobile Terminal, Mobile Station, or the like) can typically be implemented as a piece of communication equipment, such as a smartphone. Furthermore, as another example, the terminal device 200 may be a piece of equipment such as a business camera equipped with a communication function. Furthermore, the terminal device 200 need not be used by a person, and may be a device connectable to a network, such as a sensor installed on a machine or in a building of a factory, or the like, including a device for Machine Type Communication (MTC), for example.

Furthermore, the terminal device 200 may be a device referred to as Customer Premises Equipment (CPE) used in a wireless backhaul or the like.

Furthermore, as represented by D2D and V2X, the terminal device 200 may have a relay communication function or an inter-terminal communication function.

Furthermore, the terminal device 200 does not necessarily have to exist on the ground, and may be configured as a device having a communication function on an object existing in the air or space, such as an aircraft, a drone, a helicopter, a satellite, or the like. The terminal device 200 may also be configured as a device having a communication function on an object existing on the sea or under the sea, such as a ship or a submarine.

The communication control device 300 is typically a device that performs determination and/or permission, instruction, management, or the like, regarding communication parameters for the communication device 100. In the spectrum sharing environment, a database server such as a geolocation database (GLDB) or a Spectrum Access System (SAS) can correspond to the communication control device 300. Furthermore, a control device such as a spectrum manager/coexistence manager that performs radio wave interference control between communication devices, represented by devices defined in ETSI EN 303 387 or IEEE 802.19.1a-2017, can also correspond to the communication control device 300. Furthermore, for example, a Registered Location Secure Server (RLSS) defined in IEEE 802.11-2016 can also correspond to the communication control device 300. Basically, the control target of the communication control device 300 is the communication devices 100. In addition to this, the terminal devices 200 under the control of the communication device 100 may also be the control target of the communication control device 300.

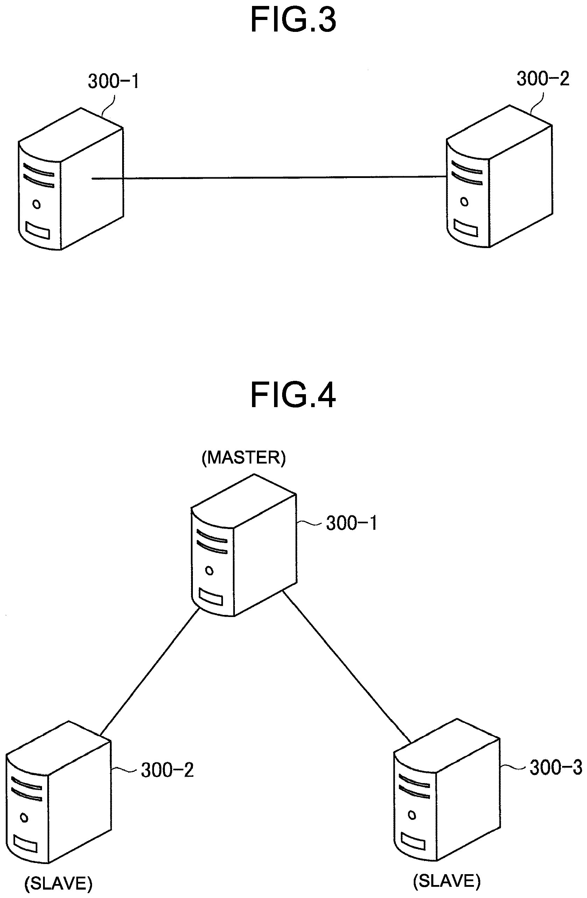

Furthermore, the communication control device 300 may exist in plurality. For example, FIG. 3 is a diagram illustrating an overview of an example of a model when a plurality of communication control devices 300 is dispersedly arranged. When there is a plurality of communication control devices 300 as in the example illustrated in FIG. 3, for example, the plurality of communication control devices 300 (namely, communication control devices 300-1 and 300-2) may exchange information regarding the individually managed communication devices 100, and may perform various calculations related to necessary spectrum allocation and interference control by using the information acquired by the exchange.

The communication control device 300 may be disposed outside or inside the network to which the communication device 100 belongs. An assumable representative exemplary case where the communication control device 300 is disposed outside the network can be a public cloud or the like. Furthermore, in a case where the communication control device 300 is disposed inside the network, the communication control device 300 can be disposed as a part of a core network of a cellular system or as a management device of an enterprise network.

FIG. 4 is a diagram illustrating an outline of an example of a model (referred to as a master-slave model) in which a part of the communication control devices 300 performs an integrated central control of a plurality of communication control devices 300. In the example illustrated in FIG. 4, a master communication control device 300-1 can also integrate a plurality of slave communication control devices 300 (for example, slave communication control devices 300-2 and 300-3) to intensively make a decision. Furthermore, the master communication control device 300-1 can also perform, for example, delegation and discarding of the decision-making authority to each of the slave communication control devices 300 for the purpose of load distribution (load balancing) or the like.

In order to fulfil a given role, the communication control device 300 can acquire necessary information from entities other than the communication device 100 and the terminal device 200. As a specific example, the communication control device 300 can acquire information necessary for protection of various communications, such as location information of a primary system, from a database (regulatory database) managed and/or operated by a radio administration organizations of a country or a region. An example of the regulatory database is the Universal Licensing System (ULS) operated by the Federal Communications Commission. Other examples of information necessary for protection of various communications can include Out-of-Band Emission (OOBE) limit, Adjacent Channel Leakage Ratio (ACLR), Adjacent Channel Selectivity, fading margin, and/or Protection Ratio (PR). For these examples, when a numerical value is legislatively given as a fixed value, it is desirable to use the numerical value.

Furthermore, as another example, it is also conceivable that the communication control device 300 acquires radio wave sensing information from a radio wave sensing system installed and operated for the purpose of radio wave detection in the primary system. As a specific example, the communication control device 300 may acquire radio wave detection information of the primary system from a radio wave sensing system such as an Environmental Sensing Capability (ESC) in CBRS of the United States. Furthermore, in a case where the communication device 100 or the terminal device 200 has a sensing capability, the communication control device 300 may acquire radio wave detection information of the primary system from the communication device 100 or the terminal device 200.

Note that the interface between the entities is not particularly limited, and may be, for example, either wired or wireless. For example, not only a wired channel but also a wireless interface independent on spectrum sharing may be used as an interface between the communication control device 300 and the communication device 100. Examples of the wireless interface independent on spectrum sharing include a wireless interface provided by a mobile network operator via a licensed band, Wi-Fi (registered trademark) communication using an incumbent license-exempt band, or the like.

Here, an example of functional configurations of the communication device 100 and the terminal device 200 will be described. The functional configuration of the communication control device 300 will be separately described below in detail.

<2.1.1. Configuration Example of Communication Device>

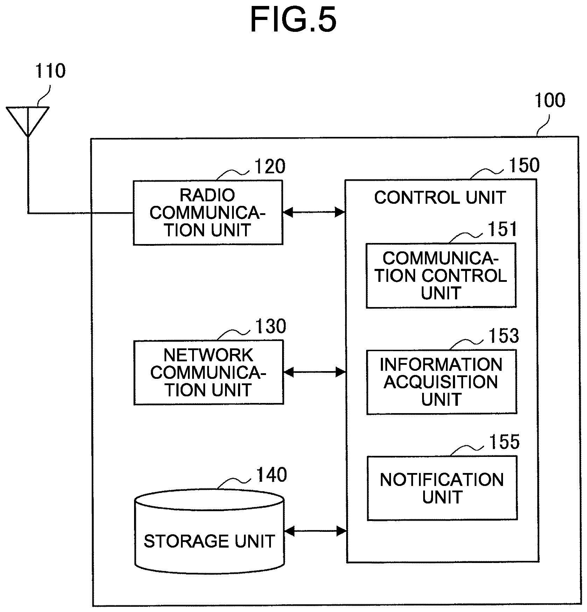

The configuration of a communication device 100 according to an embodiment of the present disclosure will be described with reference to FIG. 5. FIG. 5 is a block diagram illustrating an example of a configuration of the communication device 100 according to the embodiment of the present disclosure. Referring to FIG. 5, the communication device 100 includes an antenna unit 110, a radio communication unit 120, a network communication unit 130, a storage unit 140, and a control unit 150.

(1) Antenna Unit 110

The antenna unit 110 radiates the signal output by the radio communication unit 120 to space as a radio wave. Furthermore, the antenna unit 110 converts a radio wave in space into a signal and outputs the signal to the radio communication unit 120.

(2) Radio Communication Unit 120

The radio communication unit 120 transmits and receives signals. For example, the radio communication unit 120 transmits a downlink signal to the terminal device and receives an uplink signal from the terminal device.

(3) Network Communication Unit 130

The network communication unit 130 transmits and receives information. For example, the network communication unit 130 transmits information to another node and receives information from another node. For example, the other nodes include other base stations and core network nodes.

As described above, in the system 1 according to the present embodiment, the terminal device might operate as a relay terminal and relay the communication between a remote terminal and the base station in some cases. In such a case, for example, a radio communication device 100C corresponding to the relay terminal does not have to include the network communication unit 130.

(4) Storage Unit 140

The storage unit 140 temporarily or permanently stores a program and various data for the operation of the communication device 100.

(5) Control Unit 150

The control unit 150 provides various functions of the communication device 100. The control unit 150 includes a communication control unit 151, an information acquisition unit 153, and a notification unit 155. The control unit 150 can further include other components other than these components. That is, the control unit 150 can perform operations other than the operations of these components.

The communication control unit 151 executes various processes related to the control of radio communication with the terminal device 200 via the radio communication unit 120. Furthermore, the communication control unit 151 executes various processes related to the control of communication with other nodes (for example, other base stations, core network nodes, or the like) via the network communication unit 130.

The information acquisition unit 153 acquires various types of information from the terminal device 200 and other nodes. The acquired information may be used, for example, for controlling radio communication with a terminal device, controlling for cooperation with other nodes, or the like.

The notification unit 155 notifies the terminal device 200 and other nodes of various types of information. As a specific example, the notification unit 155 may notify the terminal device 200 of various types of information needed for the terminal device 200 within the cell to perform radio communication with the communication device 100. Furthermore, as another example, the notification unit 155 may notify another node (for example, another base station) of the information acquired from the terminal device in the cell.

<2.1.2. Configuration Example of Terminal Device>

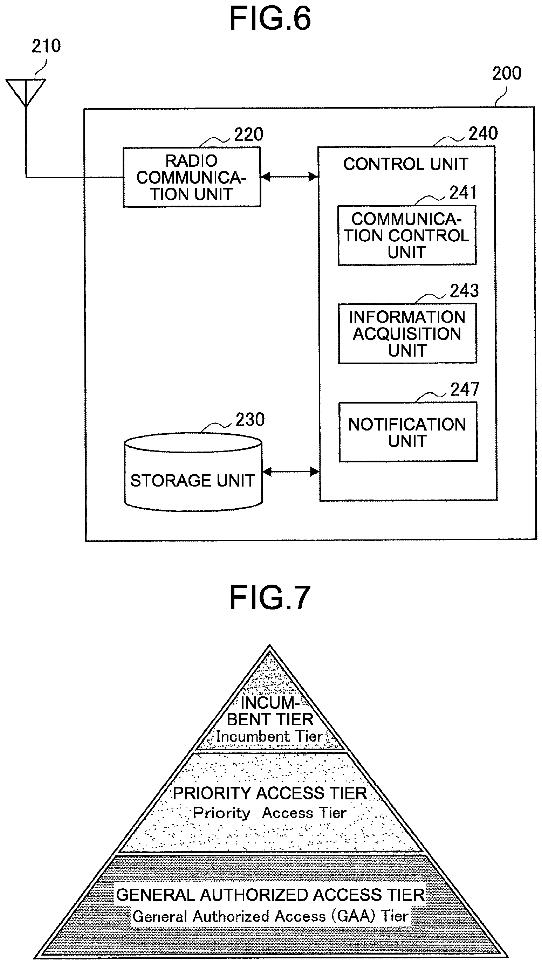

Next, an example of a configuration of the terminal device 200 according to the embodiment of the present disclosure will be described with reference to FIG. 6. FIG. 6 is a block diagram illustrating an example of a configuration of the terminal device 200 according to the embodiment of the present disclosure. As illustrated in FIG. 6, the terminal device 200 includes an antenna unit 210, a radio communication unit 220, a storage unit 230, and a control unit 240.

(1) Antenna Unit 210

The antenna unit 210 radiates the signal output by the radio communication unit 220 to space as a radio wave. Furthermore, the antenna unit 210 converts a radio wave in space into a signal and outputs the signal to the radio communication unit 220.

(2) Radio Communication Unit 220

The radio communication unit 220 transmits and receives signals. For example, the radio communication unit 220 receives a downlink signal from the base station and transmits an uplink signal to the base station.

(3) Storage Unit 230

The storage unit 230 temporarily or permanently stores a program and various data for the operation of the terminal device 200.

(4) Control Unit 240

The control unit 240 provides various functions of the terminal device 200. For example, the control unit 240 includes a communication control unit 241, an information acquisition unit 243, and a notification unit 247. The control unit 240 can further include other components other than these components. That is, the control unit 240 can perform operations other than the operations of these components.
The communication control unit 241 executes various processes related to the control of radio communication with the communication device 100 and another terminal device 200 via the radio communication unit 220.
The information acquisition unit 243 acquires various types of information from the communication device 100 and other terminal devices 200.
The notification unit 247 notifies the communication device 100 and other terminal devices 200 of various types of information.

<2.2. Terms Related to Spectrum Sharing>

Next, terms related to spectrum sharing used in the present disclosure will be described. Note that, in the present disclosure, various descriptions will be given assuming a dynamic spectrum sharing (Dynamic Spectrum Access) environment. As a representative example, the present disclosure will describe a mechanism defined in the United States FCC Rule Part 96: Citizens Broadband Radio Service (hereinafter, also referred to as "CBRS").
For example, FIG. 7 is a diagram illustrating an example of groups into which individual users are classified for spectrum sharing. In the CBRS, as illustrated in FIG. 7, each of the users as a target of spectrum sharing is classified into one of three groups illustrated in FIG. 7. Such a group is referred to as a "tier". Specifically, the example illustrated in FIG. 7 has specified, as the three groups, an Incumbent Tier, a Priority Access Tier, and a General Authorized Access (GAA) Tier.
The Incumbent Tier is a group of incumbent users of the shared frequency band. Examples of incumbent users in the CBRS include: the Department of Defense (DOD), fixed satellite service operators, and Grandfathered Wireless Broadband Licensees (GWBL). The Incumbent Tier is not required to avoid or suppress interference to lower priority tiers, namely, the Priority Access Tier and the General Authorized Access Tier. In addition, the Incumbent Tier is protected against the interference from the Priority Access Tier and the General Authorized Access Tier. That is, the user of the Incumbent Tier can use the frequency band without considering the presence of other groups. Note that the frequency band allocated to the Incumbent Tier corresponds to an example of a "first frequency band". Furthermore, at least a part of the first frequency band, which is a frequency band to be a target of secondary use (in other words, spectrum sharing target), corresponds to an example of a "second frequency band".
The Priority Access Tier is a group of users having a license referred to as a Priority Access License (PAL). The Priority Access Tier is required to avoid or suppress interference to a higher priority tier, namely, the Incumbent Tier, but is not required to avoid or suppress interference to the lower priority tier, namely, the General Authorized Access Tier. In addition, the Priority Access Tier is not protected against the interference from the higher priority tier, namely, the Incumbent Tier, but is protected against the interference from the lower priority tier, namely, the General Authorized Access Tier.
The General Authorized Access Tier (GAA Tier) is a group of other users, that is, users not belonging to any of the Incumbent Tier or the Priority Access Tier. The General Authorized Access Tier is required to avoid or suppress interference to the higher priority tiers, namely, the Incumbent Tier and the Priority Access Tier. In addition, the General Authorized Access Tier is not protected against the interference from the higher priority tiers, namely, the Incumbent Tier and the Priority Access Tier. That is, the General Authorized Access Tier corresponds to a "tier" that is legislatively required to allow opportunistic spectrum use.
Note that the above is merely an example. In application of the technology according to the present disclosure, the definition of the concept (that is, setting regarding priority) corresponding to "tier" is not necessarily limited to the above example. As a specific example, the CBRS typically has a three-tier structure, but may have a two-tier structure.

Typical examples of this include two-tier structures such as Licensed Shared Access (LSA) and TV band White Space (TVWS). The LSA has employed a structure equivalent to the above-described combination of the Incumbent Tier and the Priority Access Tier. The TVWS has employed a structure equivalent to the combination of the Incumbent Tier and the General Authorized Access Tier. In addition, there may be a structure having four or more tiers. As a specific example, there may be the setting in which an intermediate tier corresponding to a Priority Access Tier is divided into a plurality of tiers, and the plurality of tiers are further prioritized, or the like. In addition, similarly, it is allowable to have the setting in which the General Authorized Access Tier is divided into a plurality of tiers, and the plurality of tiers are further prioritized, or the like.

In addition, other radio systems may be set as the primary system according to the applied frequency band. As a specific example, the primary system may be a radio system such as TV broadcasting, a Fixed System (FS), a weather radar, a radio altimeter, or a Communications-based Train Control system. Any radio system other than these may be treated as the primary system.

In addition, the relationship between the primary system and the secondary system is not necessarily limited to the example of the spectrum sharing environment described above. In typical spectrum sharing, an incumbent system that uses a target band is referred to as a primary system, and a secondary user is referred to as a secondary system. However, when the technology according to the present disclosure is applied to an environment other than a spectrum sharing environment, at least a part of terms may be replaced with other terms. For example, a macro cell in HetNet may be defined as the primary system, and a small cell or a relay station may be defined as the secondary system. Alternatively, the base station may be defined as the primary system, and a relay UE or a vehicle UE that implements D2D or V2X existing in the coverage may be defined as the secondary system. The base station is not limited to a static type, and may be a portable type or a mobile type. In such a case, the communication control device 300 according to an embodiment of the present disclosure may be included in a base station, a relay station, a relay UE, for example.

Also, in the present disclosure, the term "frequency" or "spectrum" may be replaced by other terms. As a specific example, the term "frequency" or "spectrum" may be replaced with terms such as "resource", "resource block", "resource element", "channel", "component carrier", "carrier", and "subcarrier" or terms having similar meanings.

<<3. Description of Various Procedures>>

In this chapter, various procedures that can occur between entities in the system model will be described.

<3.1 Registration Procedure>

The registration procedure corresponds to a procedure for registering device parameters related to a communication device onto a communication control device. Typically, a registration procedure is started when a communication device or one or more communication systems including a plurality of communication devices notify the communication control device of a registration request including the device parameters.

<3.1.1 Details of Required Parameters>

An example of the device parameters in the present disclosure will be described below.

- Information specific to communication device
- Location information
- Antenna information
- Wireless interface information
- Legal Information
- Installer information

The above is merely an example, of course, and thus, information other than the above may be treated as the device parameter, for example.

The information specific to the communication device can correspond to information by which the communication device can be specified, information regarding hardware of the communication device, or the like. The information specific to the communication device can include, for example, a serial number, a product model number, or the like.

The information by which the communication device can be specified can correspond to communication device user information, a communication device serial number, or the like. Examples of assumable communication device user information include a user ID or a call sign. The user ID may be independently generated by the communication device user or may be issued in advance by the communication control device.

The information regarding the hardware of the communication device can include transmission power class information, or manufacturer information, for example. For example, FCC C.F.R Part 96 defines two classes of Category A and Category B, and the transmission power class information can include at least one of the two classes. Furthermore, 3GPP TS 36.104 and TS 38.104 define some classes of eNodeB and gNodeB, and the classes can also be used as the transmission power class information.

The information regarding the software of the communication device can include, for example, version information, a build number, or the like regarding an execution program that describes processes necessary for interaction with the communication control device. Furthermore, the information regarding the software of the communication device may also include version information, a build number, or the like of software needed for operation as the communication device.

The information related to the location typically corresponds to information by which the geographical location of the communication device can be specified. The information related to the location can include, for example, coordinate information acquired by a positioning function represented by a Global Positioning System (GPS), Beidou, a Quasi-Zenith Satellite System (QZSS), Galileo, or an Assisted Global Positioning System (A-GPS). In addition, typically, information regarding latitude, longitude, altitude, and a positioning error can be included in the information regarding the location. Furthermore, as another example, the information regarding the location may include location information registered in an information management device managed by a National Regulatory Authority (NRA) or its agency. Furthermore, as another example, the information regarding the location may include coordinates of an X-axis, a Y-axis, and a Z-axis with a specific geographical location as an origin. In addition, as the information regarding the location, an identifier indicating the outdoors or the indoors can be assigned together with the above-described coordinate information.

Furthermore, the information regarding the location may be information indicating an area in which the communication device is located. For example, information defined by the government such as a postal code, a postal address, or the like may be used as the information regarding the location. Furthermore, as the information regarding the location, for example, the region may be indicated by a set of three or more geographic coordinates. The information indicating such a region may be provided together with the above-described coordinate information, for example.

Furthermore, in a case where the communication device is located indoors, information indicating a floor of a building may be assigned to the information regarding the location. For example, information such as a floor number and an identifier indicating the ground/underground may be assigned to the information regarding the location. Furthermore, as another example, information indicating a further closed space inside the building, such as a room number and a room name in the building, may be assigned to the information regarding the location.

Typically, the positioning function is desirably provided by a communication device. However, it is not always possible to acquire the location information satisfying the required accuracy depending on the performance of the positioning function or the installation location. Therefore, the positioning function may be used by the installer. When the positioning function is used by the installer, it is desirable that the location information measured by the installer is written in the communication device.

Typically, the antenna information corresponds to information indicating performance, a configuration, or the like of an antenna included in the communication device. Typically, for example, the antenna information can include information such as an antenna installation height, a tilt angle (Downtilt), a horizontal direction (Azimuth), an aim (Boresight), an antenna peak gain, and an antenna model.

The antenna information can also include information regarding a formable beam. For example, the antenna information can include information such as a beam width, a beam pattern, and analog/digital beamforming capabilities.

Furthermore, the antenna information can also include information regarding performance and a configuration of Mutiple Input Multiple Output (MIMO) communication. For example, the antenna information can include information such as the number of antenna elements and the maximum number of spatial streams. In addition, the antenna information can also include codebook information to be used, weight matrix information (a unitary matrix obtained by Singular Value Decomposition (SVD), Eigen Value Decomposition (EVD), Block Diagonalization (BD), or the like, a Zero-Forcing (ZF) matrix, or a Minimum Mean Square Error (MMSE) matrix), or the like. In addition, in a case where a configuration such as Maximum Likelihood Detection (MLD) requiring a nonlinear operation is provided, the antenna information can include information regarding the configuration.

The antenna information may include Zenith of Direction, Departure (ZoD). The ZoD is a type of radio wave arrival angle. The ZoD may be estimated by another communication device based on a radio wave radiated from an antenna of the communication device. In this case, the communication device may be a base station, a terminal device that operates as an access point, a device that performs D2D communication, a moving relay base station, or the like. ZoD can be estimated by a radio wave arrival direction estimation technology such as Multiple Signal Classification (MUSIC) or Estimation of Signal Propagation via Rotation Invariance Techniques (ESPRIT), for example. In addition, ZoD can be used by the communication control device as measurement information.

The wireless interface information is typically information indicating a wireless interface technology included in the communication device. For example, the wireless interface information can include identifier information indicating a standard technology such as: a technology used in GSM (registered trademark), CDMA 2000, UMTS, E-UTRA, 5G NR, or a further next generation cellular system; a derivative technology based on 3GPP, such as MulteFire or LTE-Unlicensed (LTE-U); a Metropolitan Area Network (MAN) such as WiMAX (registered trademark) or WiMAX 2+; and a wireless LAN based on IEEE 802.11. In addition, a version number or a release number of a technical specification that defines the technology as described above can also be assigned to the wireless interface information. Note that the information assigned to the wireless interface information is not necessarily information regarding the standard technology, and may be, for example, information indicating a proprietary radio technology.

In addition, the wireless interface information can also include frequency band information related to frequency bands supported by the communication device. The frequency band information can be expressed by, for example, one or more combinations of an upper limit frequency and a lower limit frequency, one or more combinations of a center frequency and a bandwidth, one or more 3GPP Operating Band numbers, or the like.

The frequency band information related to the frequency bands supported by the communication device can further include capability information regarding Carrier Aggregation (CA) or channel bonding. The capability information can include combinable band information, for example. Furthermore, the capability information regarding carrier aggregation can include information regarding a band desired to be used as a Primary Component Carrier (PCC) or a Secondary Component Carrier (SCC), for example. The capability information regarding carrier aggregation can also include the number of CCs that can be aggregated at the same time.

The frequency band information supported by the communication device may include information indicating the radio wave utilization priority such as PAL and GAA.

The wireless interface information can also include modulation scheme information indicating a modulation scheme supported by the communication device. For example, representative examples of wireless interface information can include: information indicating a primary modulation scheme such as frequency shift keying (FSK), n-value phase shift keying (PSK) (n is 2, 4, 8, or the like), and n-value quadrature amplitude modulation (QAM) (n is 4, 16, 64, 256, or the like); and information indicating a secondary modulation scheme such as Orthogonal Frequency Division Multiplexing (OFDM), DFT spread OFDM (DFT-s-OFDM), or a Filter Bank Multi Carrier (FBMC).

The wireless interface information can also include error correction code information. The error correction code information can include, for example, capabilities such as a turbo code, a low density parity check (LDPC) code, and a polar code, or information regarding a coding rate to be applied.

The modulation scheme information and the error correction code information can also be expressed by a Modulation and Coding Scheme (MCS) index as another aspect.

In addition, the wireless interface information can also include information indicating a function specific to each of radio technologies supported by the communication device. For example, a representative example of wireless interface information is information related to Transmission Mode (TM) defined in LTE. In addition, those having two or more modes for a specific function can be included in the wireless interface information as in the TM. In addition, even in a case where there are no two or more modes in the technical specification, in a case where the communication device supports a function that is not essential in the specification, information indicating the function can also be included in the wireless interface information.

The wireless interface information can also include information related to the radio access technology (RAT) supported by the communication device. The wireless interface information can include, for example, information indicating an Orthogonal Multiple Access (OMA) scheme, a Non Orthogonal Multiple Access (NOMA) scheme, an opportunistic access scheme, or the like, as information regarding the radio access technology. Examples of the Orthogonal Multiple Access scheme include Time Division Multiple Access (TDMA), Frequency Division Multiple Access (FDMA), and Orthogonal Frequency Division Multiple Access (OFDMA). Furthermore, examples of the Non Orthogonal Multiple Access scheme include Power Division Multiple Access (PDMA, a representative example of which is a technique implemented by a combination of Superposition Coding (SPC) and Successive Interference Canceller (SIC)), Code Division Multiple Access (CDMA), Sparse Code Multiple Access (SCMA), Interleaver Division Multiple Access (IDMA), and Spatial Division Multiple Access (SDMA). Examples of the opportunistic access scheme include Carrier Sense Multiple Access/Collision Avoidance (CSMA/CA) and Carrier Sense Multiple Access/Collision Detection (CSMA/CD).

In addition, the wireless interface information can also include information regarding a duplex mode supported by the communication device. Typical examples of the information regarding the duplex mode include Frequency Division Duplex (FDD), Time Division Duplex (TDD), and Full Duplex (FD). In a case where information regarding TDD is included as the wireless interface information, TDD Frame Configuration information used/supported by the communication device can be assigned. In addition, the wireless interface information may include information related to the duplex mode for each of frequency bands indicated by the frequency band information.

The wireless interface information can also include information related to a transmission diversity method supported by the communication device. Examples of the transmission diversity method include Space Time Coding (STC) .

The wireless interface information can also include guard band information. The guard band information can include information regarding a guard band size defined in a standard, for example. As another example, the guard band information may include information regarding a guard band size desired by the communication device.

The legal information typically corresponds to information related to regulations that the communication device must comply with, which are defined by radio administration organizations in different countries and regions or equivalent organizations, authentication information acquired by the communication device, or the like. The information regarding the regulation typically includes, for example, upper limit value information of out-of-band emission, information regarding a blocking characteristic of the receiver, or the like. The authentication information can typically include, for example, type approval information (FCC ID, Technical Standard Conformance Certificate, etc.), legal/regulatory information (for example, FCC regulation number, ETSI Harmonized Standard number, or the like) provided as a standard for acquisition of authentication, or the like.

Among the legal information, information related to a numerical value may be substituted by information defined in the specification of the wireless interface technology. For example, the upper limit value of the out-of-band emission may be derived for application by using an Adjacent Channel Leakage Ratio (ACLR) instead of the upper limit value information of the out-of-band emission. In addition, the ACLR itself may be used as necessary. Furthermore, Adjacent Channel Selectivity (ACS) may be used instead of the blocking characteristic. In addition, these may be used in combination, or an Adjacent Channel Interference Ratio (ACIR) may be used.

The installer information can include information by which a person who installs the communication device (installer) can be specified, unique information linked with the installer, or the like. For example, in Literature 2 described below, Certified Professional Installer Registration ID (CPIR-ID) and a CPI name are disclosed as information by which the installer can be specified. In addition, for example, a postal address (mailing/contact address), an e-mail address, a telephone number, a Public Key Identifier (PKI), or the like, are disclosed as unique information linked with the installer. The above is merely an example, and the present invention is not limited to the above example, and other information regarding the installer may be included in the installer information as necessary.

· Literature 2: WINNF-TS-0016-V1.2.1 Signaling Protocols and Procedures for Citizens Broadband Radio Service (CBRS): Spectrum Access System (SAS)-Citizens Broadband Radio Service Device (CBSD) Interface Technical Specification

<3.1.1.1 Supplement of Required Parameters>

In the registration procedure, depending on the embodiment, it is assumed that not only the device parameters related to the communication device but also the device parameter related to the terminal would be required to be registered onto the communication control device. In such a case, the term "communication device" described in "3.1.1 Details of required parameters" may be replaced with a term "terminal" or a similar term for application. In addition, a parameter specific to "terminal" that is not described in "3.1.1 Details of required parameters" may also be treated as a required parameter in the registration procedure. An example of this is a user equipment (UE) category defined in 3GPP.

<3.1.2 Details of Registration Process>

The communication device or one or more communication systems including a plurality of communication devices generates a registration request message using the device parameter and notifies the communication control device of the registration request message.

Here, in a case where the device parameter includes installer information, a process of falsification prevention or the like may be applied on the registration request by using the installer information. In addition, an encryption process may be applied on a part or all of the information included in the registration request. Specifically, for example, it is possible to apply a process in which a public key specific to the installer is shared in advance between the installer and the communication control device, and the installer performs encryption on information using a secret key. Examples of the target of the encryption include sensitive security information such as location information.

Furthermore, as disclosed in Literature 2 described above, the installer may directly write the location information into the communication control device, for example.

After receiving the registration request, the communication control device performs a communication device registration process, and returns a registration response to a transmission source (for example, the communication device) of the registration request according to a result of the process. When there is no lack or abnormality of information necessary for registration, the communication control device records target information in the storage unit, and notifies the transmission source of the registration request (for example, the communication device) of normal completion. In contrast, when there is a lack or abnormality of information necessary for registration, the communication control device notifies the transmission source of the registration request of the registration failure. In the case of normal completion of registration, the communication control device may assign an ID to each of the communication devices and may notify the communication devices of the ID information by enclosing the ID information at the time of response. In a case where the registration fails, typically, a communication device, one or more communication systems including a plurality of communication devices, or an operator (for example, a mobile network operator or an individual) or an installer of these communication devices would perform correction or the like of the registration request so as to attempt the registration procedure until normal completion.

Note that the registration procedure is executed a plurality of times in some cases. Specifically, for example, when the location information is changed beyond a predetermined standard due to movement of the communication device, accuracy improvement, or the like, the registration procedure can be executed again. The predetermined standard is typically defined by a legal system. For example, in 47C.F.R Part 15, the Mode II personal/portable white space device is required to access the database again when the location information changes by 100 meters or more.

<3.2 Available Spectrum Query Procedure>

The available spectrum query procedure corresponds to a procedure used by a communication device or a communication system representing a plurality of communication devices to make a query about available spectrum information to a communication control device. Typically, the procedure is started by the notification made by the communication device or a communication system representing a plurality of communication devices to the communication control device of a query request including information by which the communication device can be specified.

Here, the available spectrum information typically corresponds to information indicating a spectrum that can be safely provided as a secondary use without causing fatal interference to the primary system at the position of the communication device. For example, when a communication device is installed in a secondary use prohibited area such as an exclusion zone in order to protect a primary system using a frequency channel F1, the communication device will not be notified of the frequency channel F1 as an available channel.

In addition, for example, when it is determined that fatal interference is to be given to the primary system even outside the secondary use prohibited area, the frequency channel would not be notified as an available channel in some cases.

In addition, there can be a frequency channel that is not notified as an available channel due to the conditions other than the primary system protection requirement described above. Specifically, in order to avoid interference that can occur between communication devices, there are cases where a frequency channel being used by another communication device existing in the vicinity of the communication device is not notified as an available channel, for example.

In addition, as described above, even in a case corresponding to a situation in which interference can occur in the primary system or another communication device existing in the vicinity, it would be possible to notify the same spectrum as that of the primary system or the communication device in the vicinity as an available channel. In such a case, typically, the maximum allowable transmission power information is included in the available spectrum information. The maximum allowable transmission power is typically expressed by Equivalent Isotropic Radiated Power (EIRP). The above is merely an example, and the present invention is not necessarily limited to the above. For example, the maximum allowable transmission power may be provided by a combination of conducted power and an antenna gain. Furthermore, the antenna gain may be used by setting an allowable peak gain for each of spatial directions.

<3.2.1 Details of Required Parameters>

Examples of the information by which the communication device can be specified include information specific to the communication device registered at the time of the registration procedure, the above-described ID information, or the like.

Furthermore, the query request can include query requirement information. The query requirement information can include, for example, information indicating a frequency band to be checked for its availability. The query request can also include transmission power information, for example. When confirming information regarding a spectrum at which a desired transmission power can be likely to be used, the communication device or the communication system representing a plurality of communication devices can include transmission power information in the query request, for example. In this case, the query requirement information does not necessarily have to be included in the query request.

The query request can also include a measurement report. The measurement report includes a result of measurement performed by the communication device and/or the terminal. The measurement report can include not only raw data but also processed information, for example. The measurement report can utilize standardized metrics represented by Reference Signal Received Power (RSRP), Reference Signal Strength Indicator (RSSI), and Reference Signal Received Quality (RSRQ), for example.

<3.2.2 Details of Available Spectrum Evaluation Process>

After receiving the query request, the available spectrum is evaluated based on query requirement information.

For example, as described above, the available spectrum can be evaluated in consideration of the primary system, the secondary use prohibited area linked with the primary system, the presence of a nearby communication device, or the like.

As described above, the maximum allowable transmission power information may be derived. Typically, the maximum allowable transmission power information is calculated using allowable interference power information in the primary system or its protection zone, computational reference point information of an interference power level to be experienced by the primary system, registration information of the communication device, a propagation loss estimation model, or the like. Specifically, as an example, the maximum allowable transmission power information is calculated by a formula expressed as (Formula 1) below.

$$P_{MaxTx\text{(dBm)}} = I_{Th\text{(dBm)}} + PL(d)_{\text{(dB)}} \qquad \cdots \text{ (Formula 1)}$$

In (Formula 1) above, $P_{MaxTx}$(dBm) represents the maximum allowable transmission power. In addition, $I_{Th\text{(dBm)}}$ represents allowable interference power. Furthermore, d represents a distance between the reference point and the communication device. In addition, $PL(d)_{\text{(dB)}}$ represents a propagation loss at the distance d. Although the antenna gain in the transceiver is not explicitly indicated in the above (Formula 1), the antenna gain may be included in the maximum allowable transmission power information in accordance with the method of expressing the maximum allowable transmission power (EIRP, conducted power, or the like) or the point of reference in the reception power (antenna input point, antenna output point, or the like). The maximum allowable transmission power information may also include a safety margin or the like for compensating for variation due to fading. In addition, feeder loss or the like may be considered as necessary.

In addition, the above (Formula 1) is described on the assumption that a single communication device is an interference source. For example, in a case where aggregated interference from a plurality of communication devices is considered at the same time, a correction value may be added. Specifically, for example, the correction value can be determined based on three types (Fixed/Predetermined, Flexible, Flexible Minimized) of interference margin schemes disclosed in Literature 3 described below.

· Literature 3: ECC Report 186, Technical and operational requirements for the operation of white space devices under geo-location approach, CEPT ECC, 2013 January

Note that the above (Formula 1) is expressed using logarithms, but may be naturally converted into true numbers in practical use. In addition, all parameters in logarithmic notation described in this specification may be appropriately converted into base in use.

Furthermore, when the above-described transmission power information is included in the query requirement information, the available spectrum can be evaluated by a method different from the above-described example. Specifically, for example, when assuming the use of the desired transmission power indicated by transmission power information, and when an estimated interference level is lower than allowable interference power in the primary system or its protection zone in the use of the transmission power, it is determined that the frequency channel is available, and the communication device is notified of the frequency channel.

Although the example in which the band use condition is calculated based on the other system related information has been described above, the method of deriving the available spectrum information in the technology according to the present disclosure is not necessarily limited to the example described above. For example, similarly to an area of a radio environment map (REM), when there is a predetermined area/space in which a communication device can use a shared band, the available spectrum information may be derived based on the location-related information and the height-related information. Furthermore, for example, even when there is provided a lookup table for associating a location and a height with available spectrum information, the available spectrum information may be derived based on the location-related information and the height-related information.

The evaluation of the available spectrum does not necessarily have to be performed after reception of the query request. For example, after the normal completion of the above-described registration procedure, the communication control device may proactively perform the evaluation without any query request. In such a case, it is allowable to create the REM or the lookup table described in the above example or an information table similar to these.

In any method, the radio wave utilization priority such as PAL or GAA may be evaluated. For example, when information regarding the radio wave utilization priority is included in the registered device parameter or the query requirement, whether the use of the spectrum is acceptable may be determined based on the priority, and notification according to the determination result may be performed. Furthermore, for example, as disclosed in Literature 2 described above, when information related to the communication device (referred to as Cluser List in Literature 2 above) that performs high priority utilization (for example, PAL) has been preliminarily registered onto the communication control device by the user, evaluation may be performed based on the information.

After completion of the evaluation of the available spectrum, the communication control device notifies the communication device of the evaluation result.

The communication device may select a desired communication parameter based on the evaluation result received from the communication control device.

<3.3 Spectrum Grant Procedure>

A Spectrum Grant Procedure is a procedure for the communication device to receive secondary use permission of a spectrum from the communication control device. Typically, after normal completion of the registration procedure, the communication device or one or more communication systems including a plurality of communication devices notifies the communication control device of a spectrum grant request including information by which the communication device can be specified, whereby the procedure is started. Note that "after normal completion of the registration procedure" also implies that the available spectrum query procedure does not necessarily have to be performed.

The present disclosure assumes that at least the following two types of spectrum grant request methods can be used.

- Designation method
- Flexible method

The designation method is a request method in which the communication device designates at least a frequency band desired to be used or maximum transmission power as a desired communication parameter and requests the communication control device to permit operation based on the desired communication parameter. The above is merely an example, and the designation target as the desired communication parameter is not necessarily limited to the above parameter, and a parameter (modulation scheme, a duplex mode, or the like) specific to the wireless interface technology may be designated. Furthermore, the desired communication parameter may include information indicating radio wave utilization priority such as PAL and GAA.

The flexible method is a request method in which a communication device designates a requirement regarding a communication parameter and requests the communication control device to designate a communication parameter that can achieve secondary use while satisfying the requirement. The requirement for the communication parameter can include a requirement for bandwidth, a desired maximum transmission power, or a desired minimum transmission power. The above is merely an example, and the designation target as the requirement related to the communication parameter is not necessarily limited to the above parameter, and parameters (modulation scheme, a duplex mode, or the like) specific to the wireless interface technology may be designated. Specifically, for example, one or more parameters of TDD Frame Configuration may be selected in advance, and then a requirement regarding the parameter may be designated.

In a case where any of the above-described methods is applied, the measurement report may be included in the request. The measurement report includes a result of measurement performed by the communication device and/or the terminal. The measurement report can include not only raw data but also processed information, for example. The measurement report can utilize standardized metrics represented by Reference Signal Received Power (RSRP), Reference Signal Strength Indicator (RSSI), and Reference Signal Received Quality (RSRQ), for example.

<3.3.1 Details of Spectrum Grant Process>

After receiving the spectrum grant request, the communication control device performs a spectrum grant process based on the spectrum grant request method. For example, using the above-described method, it is possible to perform the spectrum grant process in consideration of the primary system, the secondary use prohibited area linked with the primary system, the presence of a nearby communication device, or the like.

When the flexible method is used, the maximum allowable transmission power information may be derived using the above-described method. Typically, the maximum allowable transmission power is calculated by using allowable interference power information in the primary system or its protection zone, calculation reference point information of an interference power level to be experienced by the primary system, communication device registration information, and a propagation loss estimation model. Specifically, the maximum allowable transmission power is calculated by a mathematical expression expressed as (Formula 2) below.

$$P_{MaxTx\text{(dBm)}} = I_{Th\text{(dBm)}} + PL(d)_{\text{(dB)}} \qquad \cdots \text{(Formula 2)}$$

In the above (Formula 2), $P_{MaxTx}$(dBm) represents the maximum allowable transmission power. In addition,

$I_{Th(dBm)}$ represents allowable interference power. Furthermore, d represents a distance between the reference point and the communication device. In addition, $PL(d)_{(dB)}$ represents a propagation loss at the distance d. Although the antenna gain in the transceiver is not explicitly indicated in the above (Formula 2), the expression may be transformed in use in accordance with the method of expressing the maximum allowable transmission power (EIRP, conducted power, or the like) or the point of reference in the reception power (antenna input point, antenna output point, or the like). The maximum allowable transmission power information may also include a safety margin or the like for compensating for variation due to fading. In addition, feeder loss or the like may be considered as necessary.

In addition, the above (Formula 2) is described on the assumption that a single communication device is an interference source. For example, in a case where aggregated interference from a plurality of communication devices is considered at the same time, a correction value may be added. Specifically, for example, the correction value can be determined based on three types of schemes (Fixed/Predetermined, Flexible, Flexible Minimized) disclosed in Literature 3 described above.

Various models can be used as the propagation loss estimation model. When a model is designated for individual applications as a propagation loss estimation model, it is desirable to use the designated model. For example, in Literature 6 described below, propagation loss models such as Extended Hata (eHATA) or Irregular Terrain Model (ITM) are adopted for individual applications. As a matter of course, at implementation of the technology according to the present disclosure, the propagation loss model would not need to be limited to the example described above.

· Literature 6: WINNF-TS-0112-V1.4.1 Requirements for Commercial Operation in the U.S. 3550-3700 MHz Citizens Broadband Radio Service Band

In a predetermined application, when a model is not designated, the model may be selectively used as necessary. As a specific example, it is possible to selectively use a model in a manner in which a model that calculates a small loss, such as a free space loss model, will be used when the interference power to another communication device is estimated, while a model that calculates a large loss will be used when the coverage of the communication device is estimated. Naturally, the models may be used according to different criteria.

Furthermore, in a case where the designation method is used, the spectrum grant process can be performed using the above-described method. As a specific example, when the interference level estimated on the assumption that the communication device uses the desired transmission power indicated by the transmission power information is less than the allowable interference power in the primary system or its protection zone, it is determined that the use of the frequency channel can be permitted, and the determination result is notified to the communication device.

In any method, the radio wave utilization priority such as PAL or GAA may be evaluated. For example, when information regarding the radio wave utilization priority is included in the registered device parameter or the query requirement, whether the use of the spectrum is acceptable may be determined based on the priority, and notification according to the determination result may be performed. Furthermore, for example, as disclosed in Literature 2 described above, when information related to the communication device (referred to as Cluser List in Literature 2 above) that performs high priority utilization (for example, PAL) has been preliminarily registered onto the communication control device by the user, evaluation may be performed based on the information.

The spectrum grant process does not necessarily have to be performed at the reception of the spectrum grant request. For example, after normal completion of the registration procedure described above, the communication control device may proactively perform the spectrum grant process without the spectrum grant request. Furthermore, for example, the spectrum grant determination process may be performed at regular intervals. In such a case, an REM, a lookup table, or an information table similar thereto may be created as an example.

<3.4 Spectrum Use Notification/heartbeat>

The Spectrum use notification/heartbeat corresponds to a procedure for a communication device or a communication system representing a plurality of communication devices to notify a communication control device of spectrum use based on a communication parameter allowed to be used in the spectrum grant procedure. Typically, the procedure is started by the notification made by the communication device or a communication system representing a plurality of communication devices to the communication control device of a notification message including information by which the communication device can be specified.

The procedure of the spectrum use notification/heartbeat is desirably performed periodically until the use of the spectrum is rejected from the communication control device. After normal completion of the procedure, the communication device may start or continue radio wave transmission.

After receiving the spectrum use notification/heartbeat, the communication control device may determine whether the start/continuation of the radio wave transmission is allowable. Examples of the determination method include a method based on confirmation of the spectrum use information of the primary system. Specifically, the communication control device can determine whether to permit or refuse the start/continuation of the radio wave transmission based on a change in the used spectrum of the primary system, a change in the spectrum use status of the primary systems which do not use the radio wave on a regular basis (for example, in-ship radar), or the like.

In the procedure of the spectrum use notification/heartbeat, a communication parameter reconfiguration command may be sent from the communication control device to the communication device. Typically, the communication parameter reconfiguration command can be executed in response to the spectrum use notification/heartbeat. For example, recommended communication parameter information can be provided from the communication control device to the communication device.

<3.5 Supplement to Various Procedures>

Here, the various procedures described above do not necessarily have to be individually implemented as described below. For example, a procedure corresponding to two different procedures may be realized by defining a third procedure having roles of the two different procedures. Specifically, for example, the registration request and the available spectrum information query request may be integrally notified. Furthermore, for example, the spectrum grant procedure and the spectrum use notification/heartbeat may be integrally performed. As a matter of course, not limited to these combinations, three or more procedures may be defined as one procedure. Furthermore, the above-described various procedures may be separately performed.

Furthermore, in a case where the technology according to the present disclosure is applied for the purpose of spectrum sharing with an incumbent system, it would be desirable that appropriate procedures or equivalent procedures are selected or used based on the radio law related to the frequency band in a country or region in which the technology is implemented. For example, in a case where registration of a communication device is required to use a specific frequency band in a specific country or region, it is desirable to perform a procedure related to the registration.

Furthermore, the expression of "acquiring information" or an expression equivalent thereto in the present disclosure does not necessarily mean only acquiring according to the procedure described above. For example, even with a description of use of the location information of the communication device in the available spectrum evaluation process, it is not always necessary to use the information acquired in the registration procedure. For example, in a case where the location information is included in the available spectrum query procedure request, the location information may be used. In other words, the expression "acquiring information" or its equivalent expressions in the present disclosure mean that the described parameter may be included in other procedures within the scope of the present disclosure and within the scope of technical feasibility.

Furthermore, information that can be included in the response from the communication control device to the communication device described in the above procedure can be notified by using push notification. As a specific example, the available spectrum information, the recommended communication parameter information, the radio wave transmission continuation/refusal notification, or the like may be notified by push notification.

<3.6 Various Procedures Regarding Terminal>

Basically, individual procedures described in "3.1 Registration procedure" to "3.4 Spectrum use notification/heartbeat" are also applicable to a terminal. Note that the terminal has mobility unlike the communication device. That is, the location information of the terminal can be dynamically updated. Depending on the legal system, when the change in the location information is a certain level or more, re-registration to the communication control device would be required in some cases. Accordingly, in an operation mode defined by the Office of Communication (Ofcom) (refer to Literature 4 below), the following two types of communication parameters are defined.

- Specific Operational Parameters
- Generic Operational Parameters

• Literature 4: White Space Database Provider (WSDB) Contract, available at https://www.ofcom.org.uk/_data/assets/pdf_file/0026/84077/ white_space_database_contract_for_operational_use_of_wsds.p df

The Specific Operational Parameters are defined as "operational parameters unique to a specific slave White Space Device (WSD)" in Literature 4 described above. In other words, the Specific Operational Parameter corresponds to a communication parameter calculated by using a device parameter of a slave WSD corresponding to a terminal. The Specific Operational Parameter is characterized in that the parameter is calculated by the White Space Database (WSDB) by using the location information of the slave WSD.

From the above characteristics, it is assumed that the Specific Operational Parameter is suitable for a low-mobility or statically installed terminal.

The Generic Operational Parameters are defined as "Operational Parameters that any Slave WSD within the coverage area of a given Master WSD (corresponding to the communication device) may use" in Literature 4. The Generic Operational Parameter is characterized in that the parameter is calculated by the WSDB without using the location information of the slave WSD.

From the above characteristics, it is assumed that the Generic Operational Parameter is suitable for a high-mobility terminal.

The information for the terminal as described above can be provided by unicast or broadcast from the communication device. For example, the information for the terminal is provided by using a broadcast signal represented by a Contact Verification Signal (CVS) defined in FCC rule Part 15 Subpart H. Furthermore, as another example, the information for the terminal may be provided by a broadcast signal specific to a wireless interface. Specifically, the information for the terminal may be provided by using a Physical Broadcast Channel (PBCH) or NR-PBCH used in LTE or 5G NR, for example.

<3.7 Procedure occurring Between Communication Control Devices>

<3.7.1 Information Exchange>

A communication control device can exchange management information with another communication control device. For example, the following information is desirably exchanged between the communication control device and the other communication control device.

· Communication device registration information
· Communication device communication parameter information
· Area information

The communication device registration information typically corresponds to a device parameter of a communication device registered to the communication control device in the registration procedure. Note that, when a plurality of communication control devices exists, there would be no need to exchange all the information registered in each of the communication control devices. For example, information that might correspond to personal information would not need to be exchanged between a plurality of communication control devices. Furthermore, when the communication device registration information is exchanged, information subjected to processing such as encryption or obfuscation may be exchanged. For example, information converted into a binary value or information signed using an electronic signature mechanism may be exchanged between a plurality of communication control devices.

The communication device communication parameter information typically corresponds to information related to a communication parameter currently used by the communication device. The communication device communication parameter information desirably includes, for example, information indicating a spectrum used and transmission power. Naturally, the communication device communication parameter information may include other communication parameters.

The area information typically corresponds to information indicating a predetermined geographical zone. The area information can include zone information of various attributes in various modes.

For example, the area information may include protection zone information of a communication device to be a high priority secondary system such as PAL Protection Area (PPA) disclosed in Literature 5 described below. Area information in this case can be expressed by a set of three or more geographical coordinates, for example. Furthermore, for example, in a case where a plurality of communication control devices can refer to a common external database, the area information can be expressed by an ID indicating the information exemplified above.

· Literature 5: WINNF-TS-0096-V1.2.0 Signaling Protocols and Procedures for Citizens Broadband Radio Service (CBRS): Spectrum Access System (SAS)-SAS Interface Technical Specification

Furthermore, for example, the area information may include information indicating the coverage of the communication device. The area information in this case can also be expressed by a set of three or more geographical coordinates, for example. Furthermore, for example, the area information can also be expressed by information indicating a radius size when assuming a circle with the geographical location of the communication device as an origin. Furthermore, for example, in a case where a plurality of communication control devices can refer to a common external database, the area information can be expressed by an ID indicating the information exemplified above.

Furthermore, as another aspect, the area information can include information related to an area section determined in advance by an administration or the like. Specifically, for example, it is possible to indicate a certain region by indicating the postal address as the area information. Furthermore, for example, a license area or the like can be similarly expressed as the area information.

Furthermore, as still another aspect, the area information does not necessarily have to be defined to represent a planar area, and may be defined to represent a three-dimensional space. For example, the area information may be expressed using a spatial coordinate system. Furthermore, for example, information indicating a predetermined closed space, such as a floor number of a building, a floor, a room number, or the like, may be used as the area information.

These pieces of information can be exchanged by using various methods. Examples of the methods will be described below.

· ID designation method
. Period designation method
· Zone designation method
· Dump method

The ID designation method is a method of acquiring information corresponding to an ID given in advance to specify information managed by the communication control device, by using the ID. For example, here is an assumable exemplary case where a communication control device 300-1 manages a communication device with ID: AAA. In this case, a communication control device 300-2 designates the ID: AAA and makes an information acquisition request to the communication control device 300-1. After receiving the request, the communication control device 300-1 searches for information corresponding to the designated ID: AAA, and then notifies the communication control device 300-2 of the registration information and the communication parameter information of the corresponding communication device, as a response.

The period designation method is a method of designating a specific period, and exchanging information satisfying a predetermined condition during the period.

Examples of the predetermined condition include a condition regarding whether information is updated. For example, in a case where acquisition of communication device information in a specific period is designated by a request, registration information regarding a communication device newly registered in the period or registration information of a communication device whose communication parameter has been changed, together with communication parameter information, can be notified as a response.

Furthermore, examples of the predetermined condition include a condition regarding whether the communication control device has recorded predetermined information. For example, in a case where acquisition of the communication device information in a specific period is designated by the request, the registration information of the communication device recorded by the communication control device in the period and the communication parameter information can be notified as the response. In addition, the latest information in the period may be notified. In addition, the update history may be notified for each piece of information to be notified.

The zone designation method is a method of designating a specific zone, thereby exchanging information belonging to the zone. For example, in a case where acquisition of communication device information in a specific zone is designated by a request, registration information of a communication device installed in the zone or communication parameter information can be notified as a response.

The dump method is a method of providing all information recorded by the communication control device. For example, it is desirable that information related to the communication device and area information are provided by the dump method.

Note that the above description of the information exchange between the communication control devices corresponds to the procedure based on a pull system. That is, the information corresponding to the parameter designated by the request is notified as a response, and as an example, the information exchange can be implemented by using an HTTP GET method. Nevertheless, the information exchange between the communication control devices according to the present disclosure is not necessarily limited to the pull system, and information may be actively provided to another communication control device by a push system. The situation exchange based on the push system can be implemented by using an HTTP POST method as an example.

<3.7.2 Command/Request Procedures>

The communication control device may exchange a command or a request with another communication control device. Specific example of this is reconfiguration of communication parameters of the communication device. For example, when it is determined that the communication device 100-1 managed by the communication control device 300-1 is experiencing a large amount of interference from the communication device 100-2 managed by the communication control device 300-2, the communication control device 300-1 may request the communication control device 300-2 to change the communication parameter of the communication device 100-2.

In addition, another example is reconfiguration of area information. For example, when incompletion is found in calculation of the coverage information and the protection zone information regarding the communication device 100-2 managed by the communication control device 300-2, the communication control device 300-1 may request the communication control device 300-2 to reconfigure the area information. The above is an example and the area information reconfiguration request may be made for various reasons other than the above example.

**<<4. Exemplary Embodiments of Present Disclosure>>**

Subsequently, technical features of a system according to an embodiment of the present disclosure will be described below as an exemplary embodiment of the present disclosure. Specifically, as a representative exemplary embodiment of the system according to the present embodiment, an example when assuming application to CBRS in particular will be described. The above is merely an example and the application destination of the technology according to the present disclosure is not limited. That is, the technology according to the present disclosure can be similarly applied as long as it corresponds to the "shared secondary access" or the "horizontal shared secondary access" described above.

**<4.1. Overview of Nested Hierarchical Spectrum Access>**

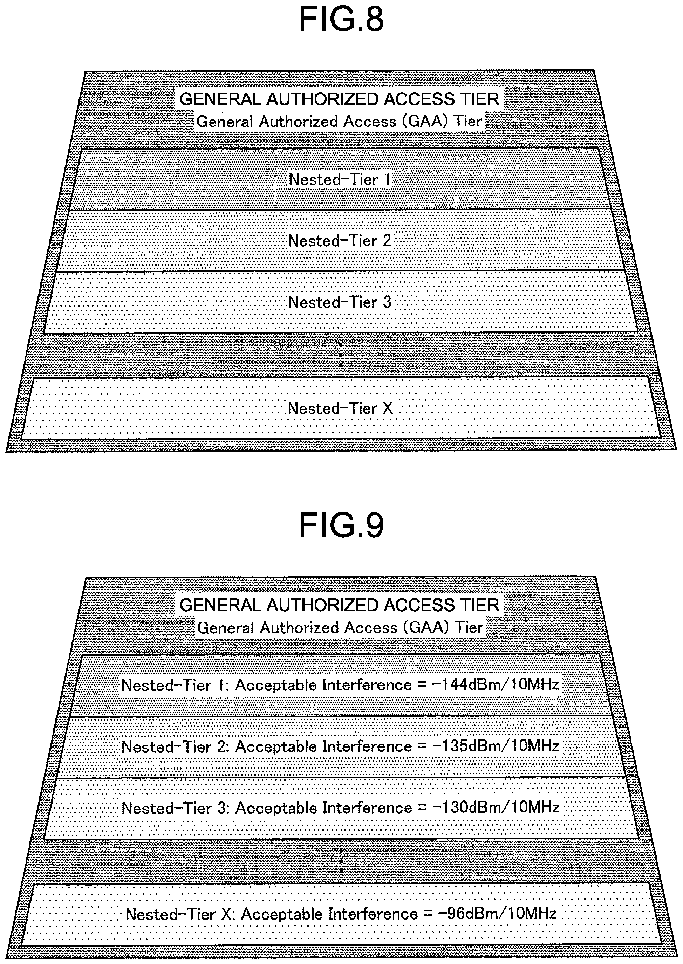

A system according to an embodiment of the present disclosure implements Nested Hierarchical Spectrum Access. Specifically, in the system according to the present embodiment, one or more tiers are further defined for at least a part (for example, the GAA tier) of the tiers of Spectrum Access defined legislatively (for example, by CBRS). For example, FIG. 8 is a diagram illustrating an overview of a technology according to an embodiment of the present disclosure, which also illustrates an exemplary case where the technology according to the present disclosure is applied to the General Authorized Access Tier (GAA Tier). Specifically, in the example illustrated in FIG. 8, "Nested-Tier 1" to "Nested-Tier X" are further defined as a plurality of tiers for the GAA tier.

In the following description, a tier defined based on a predetermined rule, such as a tier legislatively defined as illustrated in FIG. 7, will be also referred to as a "parent tier" for convenience. Furthermore, a tier defined by further tiering the parent tier is also referred to as a "nested tier or Nested-Tier". That is, in the system according to an embodiment of the present disclosure, prioritization is performed by the parent tier, and prioritization is further performed by the nested tier in at least a part of the parent tiers. Note that the priority corresponding to the parent tier (in other words, the priority associated with the tier indicated as the parent tier) corresponds to an example of a "first priority". In addition, the priority corresponding to the nested tier (in other words, the priority associated with the tier indicated as the nested tier) corresponds to an example of a "second priority".

Each of the nested tiers can be defined according to QoS requirements, wireless applications, for example. Examples of QoS requirements include SINR, CNR, SNR, SIR, I/N, RSRP, RSRQ, RSSI, CQI, throughput (links, areas, cells, etc.), capacity (links, areas, cells, etc.), amount of delay, coverage size, service area size, or the like. Furthermore, examples of the wireless application include mobile broadband, wireless backhaul, a Private Local Network, a Low Power Wide Area (LPWA), public safety, public interest, TV broadcasting, Mission Critical (medical care, etc.), V2X, D2D, or the like. The above is merely an example, and does not necessarily limit the conditions relating to the provisions of the nested tier. As a specific example, the user of the corresponding parent tier may be further prioritized by a nested tier defined according to billing, a contract plan, or the like.

The nested tier may be defined statically or dynamically. In addition, various types of control may be performed in accordance with each of the nested tiers so that each of the nested tiers continues to be restricted by rules (for example, rules legislatively stipulated) defined for the parent tier.

**<4.1.1. Example of Defining Method According to Acceptable Interference Level>**

Here, as an example of a method of defining a nested tier, a defining method according to an acceptable interference level will be described.

For example, in Literature 1 described above has disclosed a technique that, in a case where the parent tier is the GAA tier, allocates different channels when there is a coverage overlap between the CBSDs in order to prevent harmful interference to the Incumbent tier and the Priority Access tier. As an example of "coverage overlap", this literature discloses "a case of experiencing a large amount of aggregated interference at an edge or inside of the coverage" and this content is surely based on an acceptable interference level.

On the other hand, with diversification of wireless applications, there is a possibility that different acceptable interference levels are set even in a radio system based on a same communication technology. Under such circumstances, interference control in the communication control device might be complicated. In view of such a situation, the nested tier may be defined according to the acceptable interference level, for example.

For example, FIG. 9 is a diagram illustrating an example of a method of defining a nested tier, which illustrates an exemplary case where a nested tier is defined for a general authorized access tier according to an acceptable interference level.

In the example illustrated in FIG. 9, ideally, different frequency channels are desirably allocated to different nested tiers. With this configuration, the communication control device can perform communication control by isolating the nested tiers from each other, leading to an effect of eliminating the complexity regarding the control.

In addition, in the example illustrated in FIG. 9, a plurality of nested tiers (namely, Nested-Tier 1 to Nested-Tier X) are defined such that the lower the interference tolerance, the higher the rank (priority). That is, in the example illustrated in FIG. 9, the nested tiers are prioritized (ranked) such that the higher the condition of the requested acceptable interference level, the higher the priority. Note that the example illustrated in FIG. 9 is merely an exemplary illustration, and prioritization ranks between the nested tiers may be switched. As a specific example, the prioritization ranks between the nested tiers may be dynamically or semi-statically switched depending on the usage status of the radio system.

In addition, the condition of the interference tolerance associated with the nested tier may be statically set in advance. Furthermore, as another example, the condition of the interference tolerance associated with the nested tier may be set dynamically or semi-statically according to the situation at that time. As a specific example, operations such as the generation, appending, removal, or the like of the nested tier may be performed according to the interference tolerance of the radio system managed by the communication control device.

In addition, the above is merely an example, and would not necessarily limit the method of defining the nested tier. That is, not limited to the example of the interference tolerance, other QoS requirements may be used for defining the nested tier. As a specific example, the prioritization between the nested tiers may be performed so as to give higher priority to a nested tier having a higher communication quality required or a nested tier having a higher response speed required.

<4.1.2. Example of Defining Method Based on Different QoS Requirements>

Next, as another example of a method of defining a nested tier, a method of defining a nested tier based on different QoS requirements will be described. For example, even radio systems based on the same communication technology might be required to satisfy QoS requirements different from each other. The nested tier may be defined in view of such a situation.

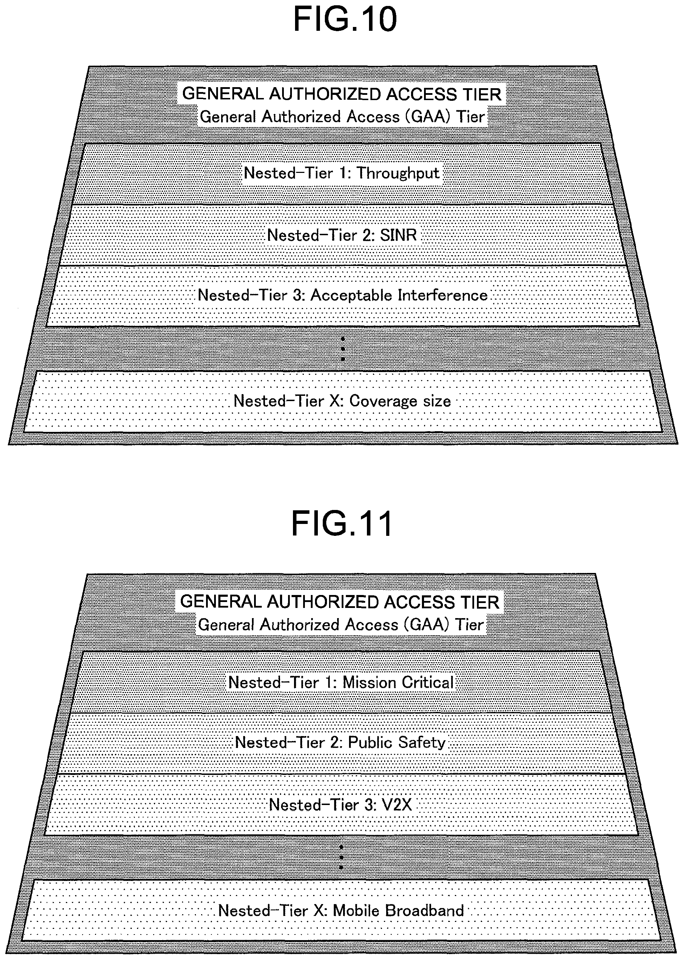

For example, FIG. 10 is a diagram illustrating another example of the method of defining the nested tier, which illustrates an exemplary case where the nested tier is defined for the General Authorized Access tier based on different QoS requirements. As a specific example, in the example illustrated in FIG. 10, Nested-Tier 1 is defined in accordance with QoS requirements regarding throughput. In contrast, Nested-Tier 2 is defined in accordance with QoS requirements related to SINR. Furthermore, Nested-Tier 3 is defined in accordance with QoS requirements related to acceptable interference.

With the above configuration, the communication control device can perform communication control with the nested tiers isolated from each other by using a nested tier configuration of the radio systems having different QoS requirements, for example, and thus, leading to an effect of eliminating the complexity of the control.

In addition, examples of a policy of prioritizing the nested tiers (that is, ranking) include the following.

· Giving higher priority to nested tiers with larger (or smaller) number of users
· Giving higher priority to nested tiers that need to satisfy QoS requirements with a higher achievement difficulty level (in other words, with greater constraint)

Furthermore, by further tiering at least part of the nested tiers out of the defined series of nested tiers, a nested tier may be further defined within the nested tier. As a specific example, it is allowable to perform further defining a nested tier by tiering a part of a series of nested tiers defined in the example illustrated in FIG. 10 according to the condition of the interference tolerance as in the example illustrated in FIG. 9.

<4.1.3. Example of Defining Method Based on Wireless Application>

Next, as another example of a method of defining a nested tier, a method of defining a nested tier based on a wireless application will be described.

For example, FIG. 11 is a diagram illustrating another example of the method of defining the nested tier, which illustrates an exemplary case where the nested tier is defined for the General Authorized Access tier based on wireless applications. As a specific example, in the example illustrated in FIG. 11, Nested-Tier 1 is associated with a wireless application classified as Mission Critical. In contrast, Nested-Tier 2 is associated with a wireless application classified as Public Safety. In addition, Nested-Tier 3 is associated with a wireless application classified as V2X.

Examples of the policy of prioritizing the nested tiers (that is, ranking) include the following.

· Giving higher priority to wireless applications having higher urgency and commonality

In addition, the ranks (priorities) between the nested tiers may be switched. Examples of the criteria related to the switching of ranks between the nested tiers include the following examples.

· Occurrence of fire, incident, or the like (increased need for public safety)
· Need for emergency remote surgery (increased need for and priority of Mission Critical)

Note that the above is merely an example, and the triggers related the switching of the ranks between the nested tiers are not necessarily limited to the above example. Furthermore, a trigger notification method as described above is also not particularly limited. As a specific example, the triggers as described above may be notified from an external device. Furthermore, as another example, the triggers as described above may be notified by a spectrum use notification/heartbeat request from a communication device (base station or the like).

Furthermore, in such a case, it is allowable to preliminarily define a spectrum use supervising policy to be applied in a case where the ranking becomes higher with the switching of ranks. That is, in a case where the rank becomes higher with the switching of the ranks, the control regarding the spectrum use may be performed based on the corresponding spectrum use monitoring policy. For example, in the case of a wireless application with high urgency and commonality, the frequency channel may be controlled to be allocated exclusively as much as possible even in a license-exempt band such as GAA. As a more specific example, the control includes a situation in which control is made such that an emergency vehicle such as an ambulance or a police car travels on a general road with higher priority, with other general vehicles controlled to avoid the emergency vehicle. Furthermore, as another example, in the case of broadband use, control may be performed so that a channel is allocated to a target wireless application in a band as continuous and wide as possible.

Furthermore, the example described with reference to FIG. 11 may be applied in combination with other examples described above with reference to FIGS. 9 and 10. That is, among a series of the nested tiers defined based on any of the examples illustrated in FIGS. 9 to 11, nested tiers may be further defined based on another example, regarding some of the nested tiers.

<4.1.4. Example of Defining Method Based on Spectrum Leasing>

Next, as another example of a method of defining a nested tier, a method of defining a nested tier based on Spectrum Leasing will be described. In CBRS, leasing of PALs is legislatively permitted in some cases. In this case, there is an assumable case where a plurality of lessees exists with respect to a lessor. The nested tier may be defined in view of such a situation.

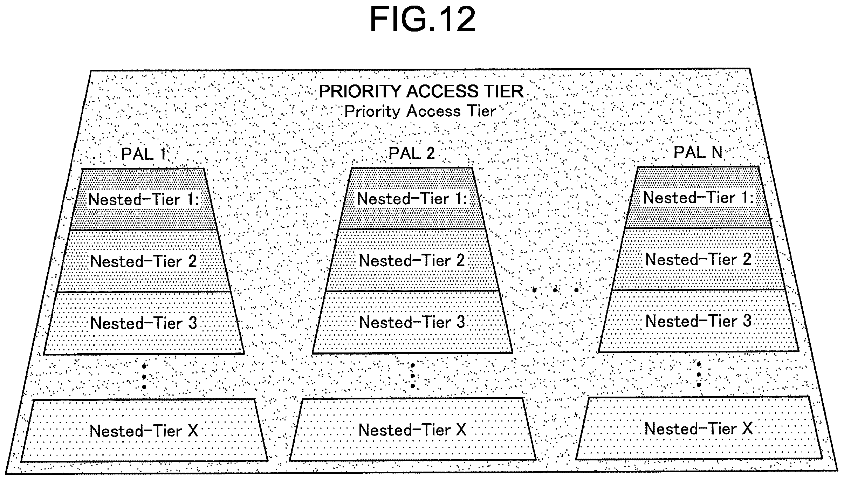

For example, FIG. 12 is a diagram illustrating another example of a method of defining a nested tier, illustrating an exemplary case where a nested tier is defined for the Priority Access Tier in accordance with a leasing status of a PAL (that is, a license related to the use of a frequency band as a target of spectrum sharing). As a specific example, nested tiers are individually defined for each of PAL 1 to PAL N in the example illustrated in FIG. 12. In the example illustrated in FIG. 12, the definition of the nested tier is independent for each of PALs. Therefore, the conditions associated with the nested tiers in some PALs (for example, QoS requirements, applications, lease costs, or the like) do not necessarily have to be similar to the conditions associated with the nested tiers positioned in similar rank in other PALs.

Furthermore, in the example illustrated in FIG. 12, for example, ranking (prioritization) between the nested tiers may be determined according to the magnitude of the amount of money required for leasing regarding spectrum use. Furthermore, as another example, the ranking between the nested tiers may be determined according to the size of the zone in which the leased PAL is valid. Furthermore, as another example, the ranking between the nested tiers may be determined according to the length of the PAL leasing period.

In the example illustrated in FIG. 12, the number of the nested tiers defined between the PALs does not necessarily have to be similar. In addition, appending or removal of the nested tier defined in each of PALs may be performed according to a predetermined condition (for example, increase or decrease in the number of lessees).

Furthermore, the example described with reference to FIG. 12 may be applied in combination with the other examples described above with reference to FIGS. 9 to 11. As a specific example, among the series of nested tiers defined for some PALs in the example illustrated in FIG. 12, some nested tiers may be further defined based on the example illustrated in any one of FIGS. 9 to 11.

<4.2. Example of Secondary System Control Method Based on Nested Tier>

Next, an example of a secondary system control method based on a nested tier will be described.
First, at the time of the registration procedure, information required for defining the nested tier is registered.

When the information is included in the registration request of the communication device, the communication control device determines a nested tier to which the communication device should belong, and then notifies the communication device of a determination result (that is, information regarding the nested tier) as a response to the registration request. Furthermore, at the time of the registration procedure, information regarding a nested tier already defined may be included in the registration request of the communication device. In this case, the communication control device may determine whether to allocate the communication device to the nested tier corresponding to the information included in the registration request (that is, the already defined nested tier) and may notify the communication device of a result of the determination as a response to the registration request.

The operation area of the nested tier may be determined based on installation location information of a plurality of communication devices and information related to the nested tier to which the communication devices belong, for example, out of the information used in the registration procedure. As a specific example, by specifying a coverage estimated to be constructed by a plurality of communication devices, it is allowable to specify the zone defined by linking the coverages as an operation area of a corresponding nested tier. These examples are merely examples, and the method of determining the operation area of the nested tier is not limited to the above examples.

Furthermore, the operation area of the nested tier may be used in a procedure related to a query regarding an available spectrum to be described below or a procedure related to spectrum grant.

In the procedure related to the query regarding the available spectrum, for example, it is allowable to perform the determination regarding the available spectrum based on the information related to the nested tier to which the communication device belongs. Furthermore, also in the procedure related to the spectrum grant, for example, it is allowable to perform the determination regarding the spectrum grant based on the information related to the nested tier to which the communication device belongs.

In a case where the operation area of the nested tier has been defined, the determination regarding the available spectrum described above or the determination regarding the spectrum grant described above may be performed based on the information regarding the operation area. As a specific example, it is assumed that there is a communication device not belonging to the operation area of the nested tier under a situation where a frequency channel is allocated in advance for each of the nested tiers. In such a case, control may be performed such that the frequency channel associated with the operation area of the nested tier would not be notified as an available frequency channel to the non-belonging communication device. In addition, the belonging communication device located within the operation area of the nested tier may be notified of the frequency channel associated with the operation area of the nested tier as an available frequency channel or a recommended frequency channel.

In addition, there can be a situation in which it is necessary to change the nested tier to which the communication device belongs or change the definition of the nested tier. When such a change is required, the communication device may notify the communication control device, in the procedure regarding the spectrum use, for example, of information regarding a change in the nested tier to which the communication device belongs or information regarding the change in the definition of the nested tier. In addition, upon receiving the notification of the information, the communication control device may notify the communication device of various types of information such as recommended communication parameters based on the information regarding the nested tier after the change.

Furthermore, at the occurrence of the change as described above, the communication control device may deprive the communication device requesting the change of the authority to use the frequency channel allocated to the communication device before occurrence of the change. When the communication device receives the response from the communication control device, the communication device may stop the radio wave transmission using the frequency channel allocated before the change.

Furthermore, there is an assumable situation in which the communication control device makes a determination to actively change the nested tier associated with the communication device under management. In such a case, the communication control device may notify the communication device of information regarding the change in the nested tier with which the communication device is associated, in response to the notification from the communication device in the procedure regarding spectrum use.

<4.3. Example of Functional Configuration for Nested Tier Based Control>

Next, an example of a functional configuration (architecture) for implementing control based on the nested tier will be described, particularly focusing on the functional configuration of the communication control device 300 described with reference to FIGS. 2 and 3.

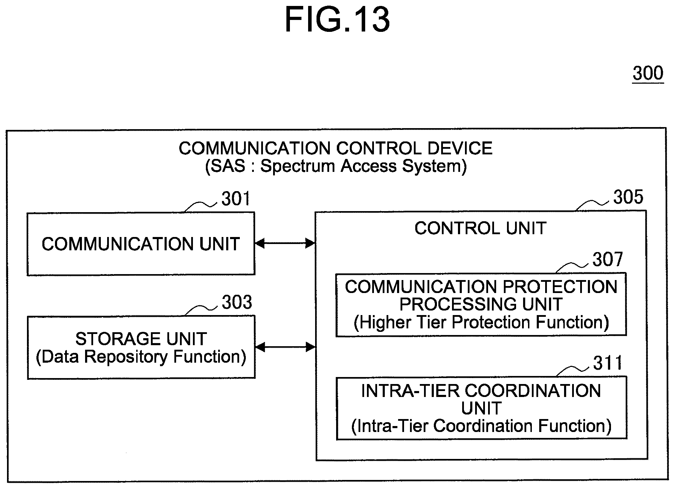

For example, FIG. 13 is a functional block diagram illustrating an example of a schematic functional configuration of the communication control device 300 according to the present embodiment. As illustrated in FIG. 13, the communication control device 300 includes a communication unit 301, a storage unit 303, and a control unit 305.

The communication unit 301 transmits and receives information. For example, the communication unit 301 transmits information to other devices and receives information from other devices. For example, the other devices include the communication device 100 and the network manager 400 illustrated in FIG. 2. Hereinafter, unless otherwise specified, each of components of the communication control device 300 is supposed to transmit and receive information to and from other devices via the communication unit 301.

The storage unit 303 (Data Repository Function) temporarily or permanently stores programs and various data for the operation of the communication control device 300. As a specific example, the storage unit 303 may store information regarding an operator of the radio system, registration information of the radio system described above, information regarding a spectrum user, and information temporarily output for processing by each of components of the communication control device 300 (for example, a calculation result or the like).

The control unit 305 provides various functions of the communication control device 300. The control unit 305 includes a communication protection processing unit 307 and an intra-tier coordination unit 311. The control unit 305 can further include other components other than these components. That is, the control unit 305 can perform operations other than the operations of these components.

The communication protection processing unit 307 (Higher Tier Protection Function) provides a communication protection function based on a relationship (prioritization) between parent tiers such as legislatively defined tiers illustrated in FIG. 7. That is, the communication protection processing unit 307 performs various types of processing (calculation or the like) regarding protection of the radio system highly prioritized in spectrum use. Whether the system is highly prioritized in the spectrum use can be determined based on various criteria. Specific examples of the criteria related to the determination include "whether the user is a primary user (incumbent user/incumbent system) of a target spectrum", "whether the user is a licensed user of the target spectrum", "whether prioritized and exclusive spectrum allocation is guaranteed in Service Level Agreement (SLA)", or the like. Specific examples of the various processes related to the protection of the radio system include "inside-outside determination of exclusion zone", "interference power control (transmission power control) satisfying an acceptable interference value", and "identical channel use avoidance (channel allocation and securing of offset frequency)". These are merely examples, and do not limit the contents of various processes related to the protection of the radio system. That is, it is possible to implement various processes feasible to satisfy the desired communication quality of the radio system highly prioritized in spectrum use, as various processes related to the protection of the radio system.

The intra-tier coordination unit 311 (Intra-Tier Coordination Function) performs various types of control related to cooperative spectrum use between a plurality of radio systems equally prioritized in spectrum use. Here, specific examples of the "plurality of radio systems equally prioritized in spectrum use" when focusing on the CBRS include a "plurality of radio systems belonging to the Priority Access Tier" and a "plurality of radio systems belonging to the General Authorized Access Tier". That is, the "plurality of radio systems equally prioritized in spectrum use" corresponds to a plurality of radio systems belonging to a tier that is required to avoid or suppress interference to a tier having a higher priority out of a series of parent tiers. Furthermore, various types of control related to cooperative spectrum use correspond to the control to further suppress the possibility of occurrence of an interference problem between radio systems. Specific examples of various types of control related to cooperative spectrum use can include "transmission power control", "channel allocation (securing of offset frequency)", "providing recommended communication parameter information", or the like.

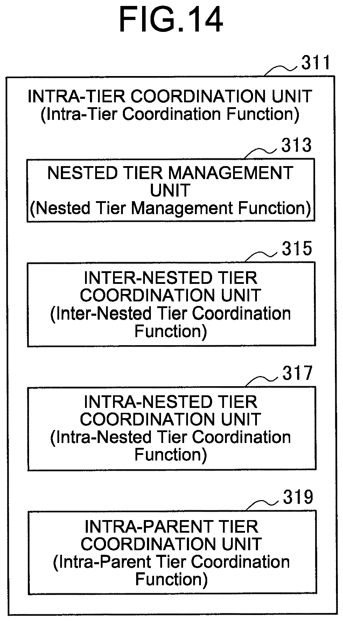

Here, an example of a more detailed functional configuration of the intra-tier coordination unit 311 will be described with reference to FIG. 14. FIG. 14 is a functional block diagram illustrating an example of a schematic functional configuration of the communication control device 300 according to the present embodiment, particularly illustrating an example of a functional configuration of the intra-tier coordination unit 311. As illustrated in FIG. 14, the intra-tier coordination unit 311 includes a nested tier management unit 313, an inter-nested tier coordination unit 315, an intra-nested tier coordination unit 317, and an intra-parent tier coordination unit 319.

The nested tier management unit 313 (Nested Tier Management Function) performs management such as constructing, appending, removing, and discarding, regarding the nested tier. In addition, at an occurrence of an event related to the management of the nested tier illustrated above, the nested tier management unit 313 may notify an external physical entity (for example, another device similarly including the nested tier management unit 313) of the occurrence of the event. In addition, the nested tier management unit 313 may receive a notification regarding an occurrence of an event related to management of the nested tier illustrated above from an external physical entity. This enables the nested tier management unit 313 to share the presence or absence of occurrence of an event related to the management of the nested tier described above (and a resulting management status of the nested tier) with the external physical entity.

The inter-nested tier coordination unit (Inter-Nested Tier Coordination Function) 315 performs various types of control related to coordination between the constructed nested tiers. As a specific example, the inter-nested tier coordination unit 315 can perform ranking (prioritization) between the nested tiers, switching the ranking of the nested tiers, interference control according to the priority between the nested tiers, or the like. In addition, at an occurrence of an event related to the various control regarding the coordination between the nested tiers illustrated above, the inter-nested tier coordination unit 315 may notify an external physical entity (for example, another device similarly including the inter-nested tier coordination unit 315) of the occurrence of the event. In addition, the inter-nested tier coordination unit 315 may receive, from an external physical entity, a notification regarding occurrence of an event related to various types of control related to the coordination among the nested tiers exemplified above. This enables the inter-nested tier coordination unit 315 to share the presence or absence of occurrence of an event related to various controls related to the coordination between the nested tiers exemplified above (with a resulting management status of the nested tier) with the external physical entity.

The intra-nested tier coordination unit 317 (Intra-Nested Tier Coordination Function) performs various types of control related to cooperative spectrum use between radio systems in a same nested tier. Incidentally, various types of control related to cooperative spectrum use correspond to the control to further suppress the possibility of occurrence of an interference problem between radio systems. Specific examples of various types of control related to cooperative spectrum use can include "transmission power control", "channel allocation (securing of offset frequency)", "providing recommended communication parameter information", or the like. That is, the intra-nested tier coordination unit 317 controls various settings related to radio communication for each of the radio systems based on the priority according to the nested tier to which each of the radio systems (for example, each of the communication devices 100) belongs.

As a specific example, as in the example described with reference to FIGS. 9 to 12, the intra-nested tier coordination unit 317 may control various settings related to radio communication with respect to a radio system such that radio communication by the radio system (communication device 100) belonging to a nested tier having a higher priority is to be given higher priority. As a more specific example, the intra-nested tier coordination unit 317 may control various settings related to radio communication such that radio communication by a radio system (communication device 100) belonging to a nested tier with a higher priority would be protected from interference of radio communication by another radio system with a lower priority. In other words, the intra-nested tier coordination unit 317 may prioritize the control of the setting related to the radio communication between the plurality of radio systems based on the priority according to the nested tier to which each of the radio systems belongs.

Furthermore, the intra-nested tier coordination unit 317 may notify the radio system (communication device 100) to be a target of the control, of information regarding the various settings after the control (for example, the determined communication parameter). The information notified to the radio system (communication device 100) at this time corresponds to an example of "second information". As a specific example, the information notified as a response to the spectrum use notification/heartbeat from the communication control device to the communication device described in "3.4 spectrum use notification/heartbeat" (for example, recommended communication parameter information) can correspond to an example of "second information". Furthermore, in the intra-nested tier coordination unit 317, a portion responsible for controlling various settings related to radio communication based on the priority according to the nested tier corresponds to an example of a "communication control unit", while a portion responsible for notifying information regarding the various settings after the control corresponds to an example of a "notification unit".

The intra-parent tier coordination unit 319 (Intra-Parent Tier Coordination Function) performs various controls related to cooperative spectrum use between radio systems over the entire parent tier. The intra-parent tier coordination unit 319 performs management related to the nested tiers, such as specifying a nested tier to which a radio system (in other words, the communication device 100) belongs and allocating the nested tier to the radio system.

As a specific example, the intra-parent tier coordination unit 319 acquires various types of information related to the priority regarding the secondary use of the target frequency band from each of the radio systems (communication devices 100). The information can include, for example, information (for example, information regarding QoS requirements, wireless applications, or the like) according to a condition regarding secondary use of the frequency band. The information acquired from the radio system (communication device 100) at this time corresponds to an example of "first information". As a specific example, at least a part of information included in various requests from the communication device to the communication control device described in "3.1 Registration procedure" and "3.3 Spectrum grant procedure" (in particular, information related to the determination of the prioritization) can correspond to an example of "first information". The intra-parent tier coordination unit 319 specifies a parent tier to which the radio system belongs based on the acquired information, and then specifies a nested tier to which the radio system belongs and allocates the nested tier to the radio system. Note that, in the intra-parent tier coordination unit 319, a portion responsible for acquiring the above information corresponds to an example of an "acquisition unit", while a portion responsible for specifying a nested tier to which a radio system belongs and allocating the nested tier to the radio system corresponds to an example of a "determination unit".

Furthermore, although details will be described below, in a case where the nested tier management unit 313, the inter-nested tier coordination unit 315, and the intra-nested tier coordination unit 317 are not provided in the intra-tier coordination unit 311, the intra-parent tier coordination unit 319 is substantially equivalent to the intra-tier coordination unit 311.

An example of the functional configuration (architecture) for implementing control based on the nested tier has been described above with reference to FIGS. 13 and 14, particularly focusing on the functional configuration of the communication control device 300 described with reference to FIGS. 2 and 3.

On the other hand, the above is merely an example, and as long as each function of the communication control device 300 described above can be implemented, the configuration related to the implementation of the function is not necessarily limited to the example described with reference to FIGS. 13 and 14.

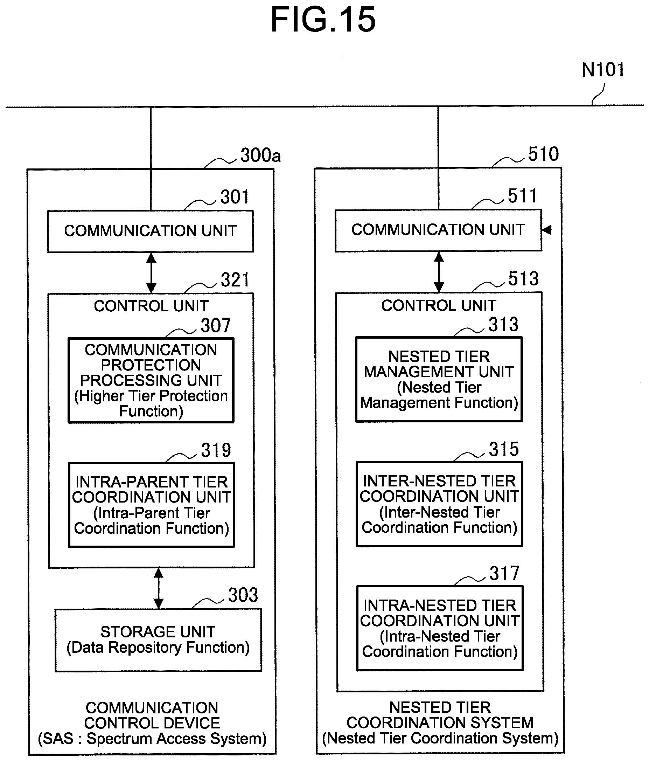

As a specific example, components related to management of the nested tiers, among the components of the communication control device 300, may be provided outside the communication control device 300. For example, FIG. 15 is a functional block diagram illustrating another example of the functional configuration of the system according to the present embodiment, and particularly illustrates another example of the functional configuration of a portion related to management of the nested tiers. Note that, in the example illustrated in FIG. 15, components substantially similar to those in the examples illustrated in FIGS. 13 and 14 are denoted by the reference numerals similar to those in the examples illustrated in FIGS. 13 and 14. Therefore, in the following, description will mainly focus on portions different from the examples illustrated in FIGS. 13 and 14, and detailed description of portions substantially similar to the examples illustrated in FIGS. 13 and 14 will be omitted.

In the example illustrated in FIG. 15, the components related to management of the nested tier (namely, the nested tier management unit 313, the inter-nested tier coordination unit 315, and the intra-nested tier coordination unit 317) in the communication control device 300 illustrated in FIGS. 13 and 14, are provided outside the communication control device 300 as the nested tier coordination system 510. Specifically, a communication control device 300a includes components other than the components corresponding to the nested tier coordination system 510 among the components of the communication control device 300 illustrated in FIGS. 13 and 14. In addition, the communication control device 300a and the nested tier coordination system 510 are connected via a predetermined network N101 so as to be able to transmit and receive information.

A communication unit 511 is schematically illustrated as a configuration for the nested tier coordination system 510 to transmit and receive information to and from other devices (for example, the communication control device 300a).

A control unit 513 provides various functions of the nested tier coordination system 510. The control unit 513 includes the nested tier management unit 313, the inter-nested tier coordination unit 315, and the intra-nested tier coordination unit 317. The control unit 513 can further include other components other than these components. That is, the control unit 513 can perform operations other than the operations of these components.

Based on the above configuration, for example, the communication control device 300a mainly performs various types of control (for example, control according to legislative prioritization, or the like) according to the relationship between the parent tiers. In addition, the nested tier coordination system 510 performs management and coordination system of the nested tiers and various types of control according to a relationship between the nested tiers.

Furthermore, in the example illustrated in FIG. 15, the intra-parent tier coordination unit 319 may play a role such as Coexistence Manager (CxM or CM) defined in Literature 1 or IEEE 802.19.1-2018 described above. That is, the intra-parent tier coordination unit 319 may perform various types of control related to secondary use of a conventional spectrum.

The configuration illustrated in FIG. 15 is merely an example, and a configuration is not particularly limited as long as the configuration can implement the functions described above. As a specific example, the communication control device 300a and the nested tier coordination system 510 may be implemented by one physical entity. As another example, the nested tier coordination system 510 may be provided as a function on the network side.

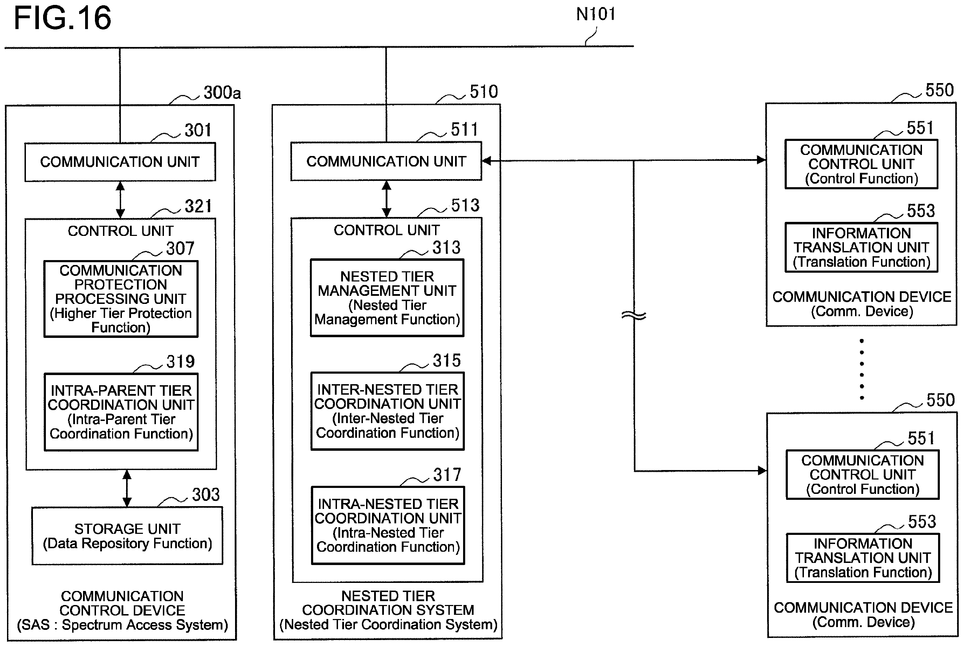

For example, FIG. 16 is a functional block diagram illustrating another example of the functional configuration of the system according to the present embodiment, and particularly illustrates another example of the functional configuration of a portion related to management of the nested tier.

In FIG. 16, a communication device 550 (Comm. Device) schematically illustrates a communication device disposed on the network side. That is, the communication device 550 can be implemented as an entity in a core network, for example. As illustrated in FIG. 16, the communication device 550 includes, for example, a communication control unit 551 and an information translation unit 553.

When notifying the communication control device 300a of the communication device parameters or notifying the communication device 550 of the available spectrum information, the information translation unit 553 (Translation Function) plays a role of translating signaling into a format that can be recognized by each device.

The communication control unit 551 (Control Function) transmits various types of information to the communication control device 300a via the information translation unit 553, and performs various types of control of the communication device 550 based on information (for example, information according to various control results) notified from the communication control device 300a.

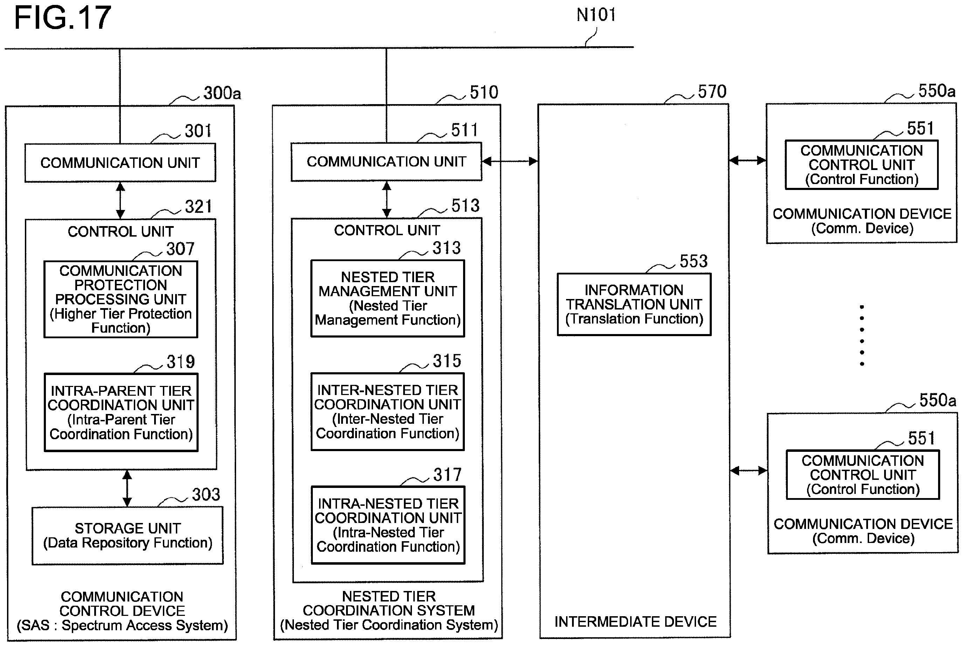

Furthermore, the function corresponding to the information translation unit 553 may be implemented by another entity different from the communication device 550. For example, FIG. 17 is a functional block diagram illustrating another example of the functional configuration of the system according to the present embodiment, particularly illustrating another example of the functional configuration of a portion related to management of the nested tier.

In FIG. 17, a communication device 550a corresponds to the communication device 550 in the example illustrated in FIG. 16. On the other hand, in the example illustrated in FIG. 17, the communication device 550a does not include the information translation unit 553, while an intermediate device 570 including the information translation unit 553 is provided as an entity different from the communication device 550a. That is, in the example illustrated in FIG. 17, the communication device 550a individually transmits and receives various types of information to and from the communication control device 300a and the nested tier coordination system 510 via the intermediate device 570.

In addition, the above is merely an example, and a method related to management of the nested tier, such as construction, appending, removal, and discard of the nested tier described above, is not particularly limited, and a device (for example, a device including a nested tier management unit 313) responsible for the management is not particularly limited as well. As a specific example, as described above, a device corresponding to the communication control device 300 or the nested tier coordination system 510 may manage the nested tiers described above. As another example, another device (for example, another entity, a separately provided server, or the like) different from the communication control device 300 and the nested tier coordination system 510 may manage the nested tiers described above. In addition, regarding the management of the nested tiers described above, the device responsible for the management may dynamically execute at least a part of the processing related to the management according to the situation at that time. As a specific example, the device may execute the processing related to the management in response to a request from another device. Furthermore, as another example, the device responsible for the management may execute the processing related to the management based on an instruction of an operator or the like. As another example, a nested tier may be constructed in advance (that is, the nested tiers may be statically constructed).

<4.4. Example of Application to Frequency Band>

The frequency band to be an application target of the technology according to the embodiment of the present disclosure described above is not particularly limited. As a specific example, in a case where a licensed band is a target, the example described with reference to FIG. 12 is applicable. Furthermore, as another example, in a case where a license-exempt band is set as a target, the examples described with reference to each of FIGS. 9 to 11 are applicable. In addition, the technology according to an embodiment of the present disclosure can be similarly applied to a shared band available on a co-primary basis or a secondary basis.

In addition, in order to integrally manage a series of available frequency bands (in other words, all available frequency bands), nested tiers may be constructed by regarding a series of frequency bands as one frequency band. With such control, it is also possible to adaptively manage allocation of frequency bands with higher precision and allocation of frequency bands according to QoS requirements and individual wireless applications with higher suitability.

<<5. Application Examples>>

The technology according to the present disclosure is applicable to various products. For example, the communication control device 300 and the network manager 400 may be implemented as any type of server such as a tower server, a rack server, or a blade server. Furthermore, at least a part of the components of the communication control device 300 and the network manager 400 may be implemented in a module (for example, an integrated circuit module formed with one die, or a card or blade inserted into a slot of a blade server) mounted on a server.

Furthermore, the communication device 100 may be implemented as any type of evolved Node B (eNB) such as a macro eNB or a small eNB, for example. The small eNB may be an eNB that covers a cell smaller than a macro cell, such as a pico eNB, a micro eNB, or a home (femto) eNB. Instead, the communication device 100 may be implemented as other types of base station such as a Node B or a Base Transceiver Station (BTS). The communication device 100 may include a main body (also referred to as a base station device) that controls radio communication, and one or more Remote Radio Heads (RRHs) disposed at a location different from the main body. Furthermore, various types of terminals described below may operate as the communication device 100 by temporarily or semi-permanently executing the base station function.

Furthermore, for example, the terminal device 200 may be implemented as a mobile terminal such as a smartphone, a tablet Personal Computer (PC), a notebook PC, a portable game terminal, a portable/dongle type mobile router, and a digital camera, or as an in-vehicle terminal such as a car navigator. The terminal device 200 may also be implemented as a terminal (also referred to as a Machine Type Communication (MTC) terminal) that performs Machine To Machine (M2M) communication, in a surveillance camera, a gateway terminal of various sensor devices, a vehicle that actualizes a means of transportation, such as a car, a bus, a train, or an aircraft. Furthermore, at least a part of components of the terminal device 200 may be implemented in a module (for example, an integrated circuit module formed with one die) mounted on these terminals.

<5.1. Application Examples Related to Server>

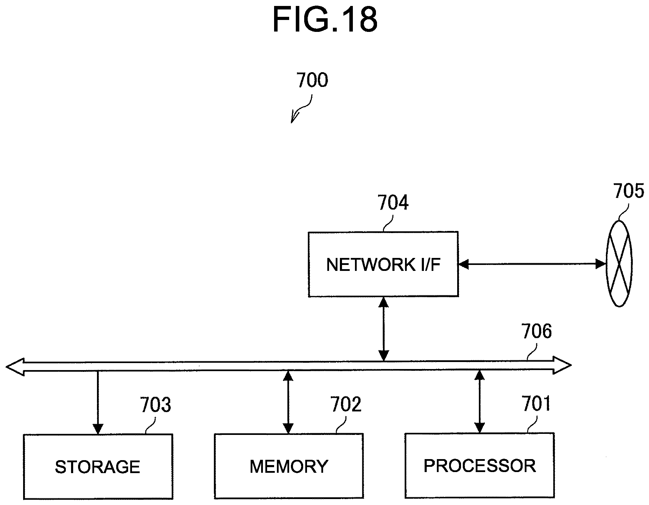

FIG. 18 is a block diagram illustrating an example of a schematic configuration of a server 700 to which the techniques according to the present disclosure are applicable. The server 700 includes a processor 701, memory 702, storage 703, a network interface 704, and a bus 706.

The processor 701 may be, for example, a central processing unit (CPU) or a digital signal processor (DSP), and controls various functions of the server 700. The memory 702 includes random access memory (RAM) and read only memory (ROM), and stores programs to be executed by the processor 701 as well as data. The storage 703 can include a storage medium such as semiconductor memory or a hard disk.

The network interface 704 is a wired communication interface for connecting the server 700 to the wired communication network 705. The wired communication network 705 may be a core network such as an Evolved Packet Core (EPC), or may be a Packet Data Network (PDN) such as the Internet.

The bus 706 connects the processor 701, the memory 702, the storage 703, and the network interface 704 to each other. The bus 706 may include two or more buses (for example, a high-speed bus and a low-speed bus) having different bus speeds.

In the server 700 illustrated in FIG. 18, one or more components included in the communication control device 300 described with reference to FIGS. 13 and 14 may be implemented by the processor 701, for example. As an example, a program for causing the processor to function as the one or more components (in other words, a program for causing the processor to perform the operation of the one or more components) may be installed on the server 700 and the processor 701 may execute the program. As another example, the server 700 may be equipped with a module including the processor 701 and the memory 702, and the one or more components may be mounted on the module. In this case, the module may store a program for causing the processor to function as the one or more components in the memory 702, and the program may be executed by the processor 701. As described above, the server 700 or the above-described module may be provided as a device including the one or more components, and a program for causing the processor to function as the one or more components may be provided. Furthermore, a readable recording medium on which the above program is recorded may be provided.

<5.2. Application Examples Related to Base Station>

(First Application Example)

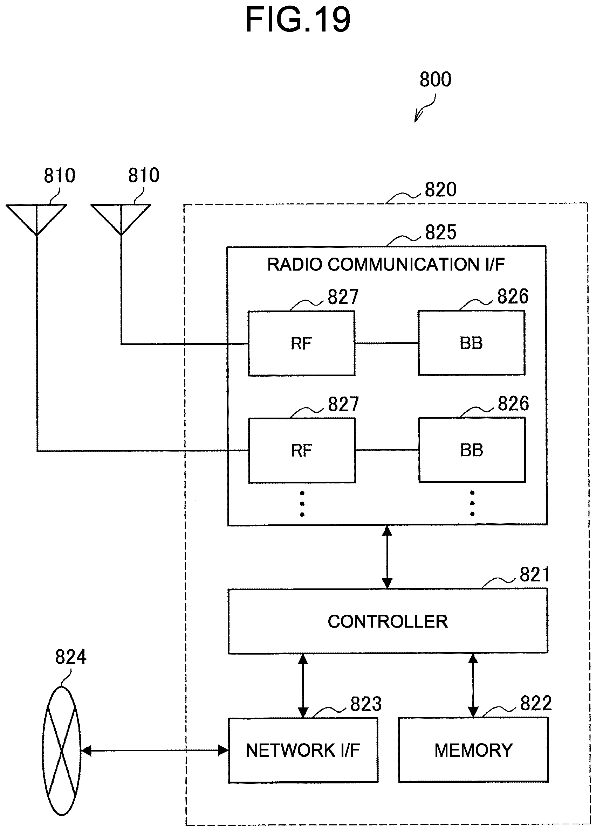

FIG. 19 is a block diagram illustrating a first example of a schematic configuration of an eNB to which the techniques according to the present disclosure are applicable. An eNB 800 has one or more antennas 810 and a base station device 820. Each of the antennas 810 and the base station device 820 can be connected to each other via an RF cable.

Each of the antennas 810 has a single or a plurality of antenna elements (for example, a plurality of antenna elements constituting a MIMO antenna) and is used for transmission and reception of radio signals by the base station device 820. The eNB 800 has a plurality of antennas 810 as illustrated in FIG. 19, and the plurality of antennas 810 may correspond to a plurality of frequency bands used by the eNB 800, respectively, for example. Although FIG. 19 illustrates an example in which the eNB 800 has the plurality of antennas 810, the eNB 800 may have a single antenna 810.

The base station device 820 includes a controller 821, memory 822, a network interface 823, and a radio communication interface 825.

The controller 821 may be a CPU or DSP, for example, and controls operation of various functions of an upper layer of the base station device 820. For example, the controller 821 generates a data packet from the data in the signal processed by the radio communication interface 825 and transfers the generated packet via the network interface 823. The controller 821 may generate a bundled packet by bundling data from a plurality of baseband processors and transfer the generated bundled packet. In addition, the controller 821 may include logical functions that execute controls such as radio resource control, radio bearer control, mobility management, admission control, or scheduling. Furthermore, the control may be executed in cooperation with surrounding eNBs or a core network node. The memory 822 includes RAM and ROM, and stores a program executed by the controller 821 and various types of control data (for example, terminal list, transmission power data, and scheduling data)

The network interface 823 is a communication interface for connecting the base station device 820 to a core network 824. The controller 821 may communicate with a core network node or other eNBs via the network interface 823. In that case, the eNB 800 may be connected to the core network node or other eNB to each other by a logical interface (for example, an S1 interface or an X2 interface). The network interface 823 may be a wired communication interface or a radio communication interface for a wireless backhaul. When the network interface 823 is a radio communication interface, the network interface 823 may use a frequency band higher than the frequency band used by the radio communication interface 825, for radio communication.

The radio communication interface 825 supports a cellular communication scheme such as Long Term Evolution (LTE) or LTE-Advanced, and provides a radio connection to terminals located in the cell of the eNB 800 via the antenna 810. The radio communication interface 825 can typically include a baseband (BB) processor 826, RF circuit 827, or the like. The BB processor 826 may perform encoding/decoding, modulation/demodulation, and multiplexing/demultiplexing, for example, and executes various types of signal processing in individual layers (for example, L1, Medium Access Control (MAC), Radio Link Control (RLC), and Packet Data Convergence Protocol (PDCP)). The BB processor 826 may include some or all of the above-described logical functions instead of the controller 821. The BB processor 826 may be a module including: memory for storing a communication control program; a processor for executing the program; and related circuits. The functions of the BB processor 826 may be modified by updating the above program. Furthermore, the module may be a card or a blade inserted into a slot of the base station device 820, or may be a chip mounted on the card or the blade. The RF circuit 827 may include a mixer, a filter, an amplifier, or the like, and transmits and receives radio signals via the antenna 810.

The radio communication interface 825 may include a plurality of BB processors 826 as illustrated in FIG. 19, and the plurality of BB processors 826 may correspond to a plurality of frequency bands used by the eNB 800, respectively, for example. Furthermore, the radio communication interface 825 may include a plurality of RF circuits 827 as illustrated in FIG. 19, and the plurality of RF circuits 827 may correspond to a plurality of antenna elements, respectively, for example. Although FIG. 19 illustrates an example in which the radio communication interface 825 includes a plurality of BB processors 826 and a plurality of RF circuits 827, the radio communication interface 825 may include a single BB processor 826 or a single RF circuit 827.

In the eNB 800 illustrated in FIG. 19, one or more components included in the control unit 150 described with reference to FIG. 5 (for example, at least one of the communication control unit 151, the information acquisition unit 153, or the notification unit 155) may be implemented in the radio communication interface 825. Alternatively, at least a part of these components may be implemented in the controller 821. As an example, the eNB 800 is equipped with a module including a part or all of the radio communication interface 825 (for example, the BB processor 826) and/or the controller 821, and the module may be equipped with one or more of the above components. In this case, the module may store a program for causing the processor to function as the one or more components (in other words, a program for causing the processor to perform the operation of the one or more components) and may execute the program. As another example, the program causing the processor to function as the one or more of the above components may be installed in the eNB 800, and the radio communication interface 825 (for example, the BB processor 826) and/or the controller 821 may execute the program. As described above, the eNB 800, the base station device 820, or the above module may be provided as a device including the one or more components, and a program for causing the processor to function as the one or more components may be provided. Furthermore, a readable recording medium on which the above program is recorded may be provided.

Furthermore, in the eNB 800 illustrated in FIG. 19, the radio communication unit 120 described with reference to FIG. 5 may be implemented in the radio communication interface 825 (for example, the RF circuit 827). Furthermore, the antenna unit 110 may be implemented in the antenna 810. Furthermore, the network communication unit 130 may be implemented in the controller 821 and/or the network interface 823. Furthermore, the storage unit 140 may be implemented in the memory 822.

(Second Application Example)

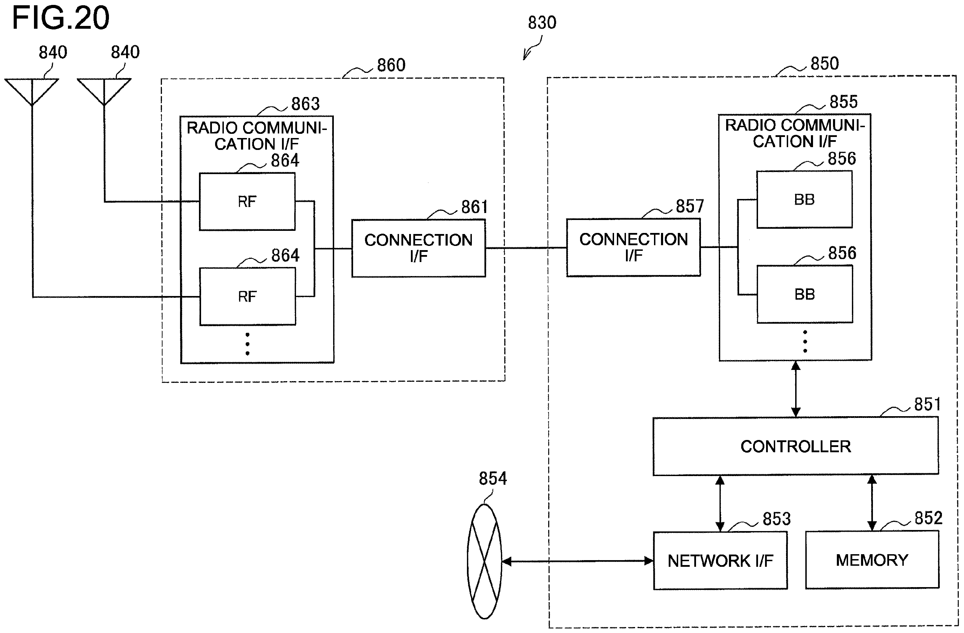

FIG. 20 is a block diagram illustrating a second example of a schematic configuration of an eNB to which the techniques according to the present disclosure are applicable. An eNB 830 has one or more antennas 840, a base station device 850, and an RRH 860. Each of the antennas 840 and the RRH 860 can be connected to each other via an RF cable. Furthermore, the base station device 850 and the RRH 860 can be connected to each other by a high-speed line such as an optical fiber cable.

Each of the antennas 840 has a single or a plurality of antenna elements (for example, a plurality of antenna elements constituting a MIMO antenna) and is used for transmission and reception of radio signals by the RRH 860. The eNB 830 has a plurality of antennas 840 as illustrated in FIG. 20, and the plurality of antennas 840 may correspond to a plurality of frequency bands used by the eNB 830, respectively, for example. Although FIG. 20 illustrates an example in which the eNB 830 has the plurality of antennas 840, the eNB 830 may have a single antenna 840.

The base station device 850 includes a controller 851, memory 852, a network interface 853, a radio communication interface 855, and a connection interface 857. The controller 851, the memory 852, and the network interface 853 are similar to the controller 821, memory 822, and network interface 823 described with reference to FIG. 19, respectively.

The radio communication interface 855 supports a cellular communication scheme such as LTE or LTE-Advanced, and provides a radio connection to terminals located in the sector corresponding to the RRH 860 via the RRH 860 and the antenna 840. The radio communication interface 855 can typically include a BB processor 856 or the like. The BB processor 856 is similar to the BB processor 826 described with reference to FIG. 19, except that connection to an RF circuit 864 of the RRH 860 is made via the connection interface 857. The radio communication interface 855 may include a plurality of BB processors 856 as illustrated in FIG. 20, and the plurality of BB processors 856 may correspond to a plurality of frequency bands used by the eNB 830, respectively, for example. Although FIG. 20 illustrates an example in which the radio communication interface 855 includes a plurality of BB processors 856, the radio communication interface 855 may include a single BB processor 856.

The connection interface 857 is an interface for connecting the base station device 850 (radio communication interface 855) to the RRH 860. The connection interface 857 may be a communication module for communication over the high-speed line connecting the base station device 850 (radio communication interface 855) and the RRH 860.

The RRH 860 also includes a connection interface 861 and a radio communication interface 863.

The connection interface 861 is an interface for connecting the RRH 860 (radio communication interface 863) to the base station device 850. The connection interface 861 may be a communication module for communication over the high-speed line.

The radio communication interface 863 transmits and receives radio signals via the antenna 840. The radio communication interface 863 can typically include the RF circuit 864 or the like. The RF circuit 864 may include a mixer, a filter, an amplifier, or the like, and transmits and receives radio signals via the antenna 840. The radio communication interface 863 includes a plurality of RF circuits 864 as illustrated in FIG. 20, and the plurality of RF circuits 864 may correspond to a plurality of antenna elements, respectively, for example. Although FIG. 20 illustrates an example in which the radio communication interface 863 includes a plurality of RF circuits 864, the radio communication interface 863 may include a single RF circuit 864.

In the eNB 830 illustrated in FIG. 20, one or more components included in the control unit 150 described with reference to FIG. 5 (for example, at least one of the communication control unit 151, the information acquisition unit 153, or the notification unit 155) may be implemented in the radio communication interface 855 and/or the radio communication interface 863. Alternatively, at least a part of these components may be implemented in the controller 851. As an example, the eNB 830 may be equipped with a module including part or all of the radio communication interface 855 (for example, the BB processor 856) and/or the controller 851, and the module may be equipped with one or more of the above components. In this case, the module may store a program for causing the processor to function as the one or more components (in other words, a program for causing the processor to perform the operation of the one or more components) and may execute the program. As another example, the program causing the processor to function as the one or more of the above components may be installed on the eNB 830, and the radio communication interface 855 (for example, the BB processor 856) and/or the controller 851 may execute the program. As described above, the eNB 830, the base station device 850, or the above module may be provided as a device including the one or more components, and a program for causing the processor to function as the one or more components may be provided. Furthermore, a readable recording medium on which the above program is recorded may be provided.

Furthermore, in the eNB 830 illustrated in FIG. 20, the radio communication unit 120 described with reference to FIG. 5, for example, may be implemented in the radio communication interface 863 (for example, the RF circuit 864). Furthermore, the antenna unit 110 may be implemented in the antenna 840. Furthermore, the network communication unit 130 may be implemented in the controller 851 and/or the network interface 853. Furthermore, the storage unit 140 may be implemented in the memory 852.

<5.3. Application examples related to terminal devices>

(First Application Example)

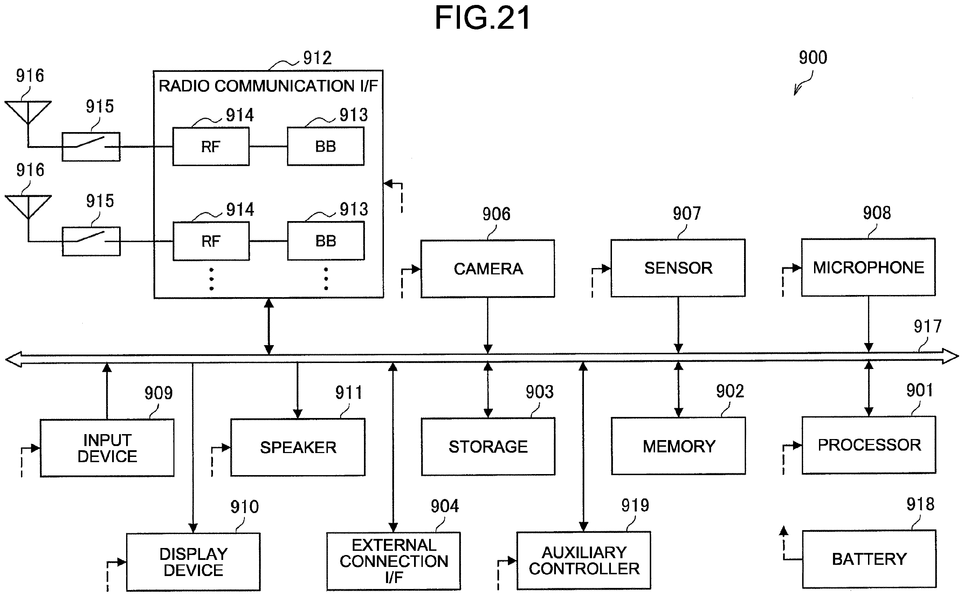

FIG. 21 is a block diagram illustrating an example of a schematic configuration of a smartphone 900 to which the techniques according to the present disclosure are applicable. The smartphone 900 includes a processor 901, memory 902, storage 903, an external connection interface 904, a camera 906, a sensor 907, a microphone 908, an input device 909, a display device 910, a speaker 911, a radio communication interface 912, one or more antenna switches 915, one or more antennas 916, a bus 917, a battery 918, and an auxiliary controller 919.

The processor 901 may be a CPU or a System on Chip (SoC), for example, and controls the functions of the application layer and other layers of the smartphone 900. The memory 902 includes RAM and ROM and stores programs to be executed by the processor 901, and data. The storage 903 can include a storage medium such as semiconductor memory or a hard disk. The external connection interface 904 is an interface for connecting an external device such as a memory card or a Universal Serial Bus (USB) device to the smartphone 900.

The camera 906 includes an image sensor such as a Charge Coupled Device (CCD) or a Complementary Metal Oxide Semiconductor (CMOS), and generates a captured image. Examples of the sensor 907 can include a group of sensors such as a positioning sensor, a gyro sensor, a geomagnetic sensor, and an acceleration sensor. The microphone 908 converts the voice input to the smartphone 900 into a voice signal. The input device 909 includes a touch sensor that detects a touch on the screen of the display device 910, a keypad, a keyboard, a button, or a switch and receives an input of operation or information from the user. The display device 910 has a screen such as a liquid crystal display (LCD) or an organic light emitting diode (OLED) display, and displays an output image of the smartphone 900.

The speaker 911 converts the voice signal output from the smartphone 900 into voice.

The radio communication interface 912 supports a cellular communication scheme such as LTE or LTE-Advanced and executes radio communication. The radio communication interface 912 can typically include a BB processor 913, an RF circuit 914, or the like. The BB processor 913 may perform, for example, encoding/decoding, modulation/demodulation, and multiplexing/demultiplexing, and performs various signal processing for radio communication. The RF circuit 914 may include a mixer, a filter, an amplifier, or the like, and transmits and receives radio signals via the antenna 916. The radio communication interface 912 may be a one-chip module integrating the BB processor 913 and the RF circuit 914. The radio communication interface 912 may include a plurality of BB processors 913 and a plurality of RF circuits 914 as illustrated in FIG. 21. Although FIG. 21 illustrates an example in which the radio communication interface 912 includes a plurality of BB processors 913 and a plurality of RF circuits 914, the radio communication interface 912 may include a single BB processor 913 or a single RF circuit 914.

Furthermore, the radio communication interface 912 may support other types of radio communication scheme such as short-range radio communication scheme, near field radio communication scheme, or wireless Local Area Network (LAN) scheme in addition to the cellular communication scheme. In that case, the radio communication interface 912 may include the BB processor 913 and the RF circuit 914 for each of the radio communication schemes.

Each of the antenna switches 915 switches the connection destination of the antenna 916 between a plurality of circuits included in the radio communication interface 912 (for example, circuits for different radio communication schemes).

Each of the antennas 916 has a single or a plurality of antenna elements (for example, a plurality of antenna elements constituting a MIMO antenna) and is used for transmitting and receiving radio signals by the radio communication interface 912. The smartphone 900 may have a plurality of antennas 916 as illustrated in FIG. 21. Although FIG. 21 illustrates an example in which the smartphone 900 has the plurality of antennas 916, the smartphone 900 may have a single antenna 916.

Furthermore, the smartphone 900 may be provided with the antenna 916 for each of the radio communication schemes. In that case, the antenna switch 915 may be omitted from the configuration of the smartphone 900.

The bus 917 provides mutual connection between the processor 901, the memory 902, the storage 903, the external connection interface 904, the camera 906, the sensor 907, the microphone 908, the input device 909, the display device 910, the speaker 911, the radio communication interface 912, and the auxiliary controller 919. The battery 918 supplies power to individual blocks of the smartphone 900 illustrated in FIG. 21 via the power supply lines partially illustrated by the broken lines in the figure. The auxiliary controller 919 controls operation of minimum necessary functions of the smartphone 900 during a sleep mode, for example.

In the smartphone 900 illustrated in FIG. 21, one or more components (for example, at least one of the communication control unit 241, the information acquisition unit 243, a measurement unit 245, and the notification unit 247) included in the control unit 240 described with reference to FIG. 6 may be implemented in the radio communication interface 912. Alternatively, at least a part of these components may be implemented in the processor 901 or the auxiliary controller 919. As an example, the smartphone 900 may be equipped with a module including a part (for example, the BB processor 913) or all of the radio communication interface 912, the processor 901, and/or the auxiliary controller 919, and may be equipped with one or more of the above-described components in the module. In this case, the module may store a program for causing the processor to function as the one or more components (in other words, a program for causing the processor to perform the operation of the one or more components) and may execute the program. As another example, the program causing the processor to function as the one or more of the above components may be installed in the smartphone 900, and the radio communication interface 912 (for example, the BB processor 913), the processor 901, and/or the auxiliary controller 919 may execute the program. As described above, the smartphone 900 or the above module may be provided as a device including the one or more components, and a program for causing the processor to function as the one or more components may be provided. Furthermore, a readable recording medium on which the above program is recorded may be provided.

Furthermore, in the smartphone 900 illustrated in FIG. 21, for example, the radio communication unit 220 described with reference to FIG. 6 may be implemented in the radio communication interface 912 (for example, the RF circuit 914). Furthermore, the antenna unit 210 may be implemented in the antenna 916. Furthermore, the storage unit 230 may be implemented in the memory 902.

(Second Application Example)

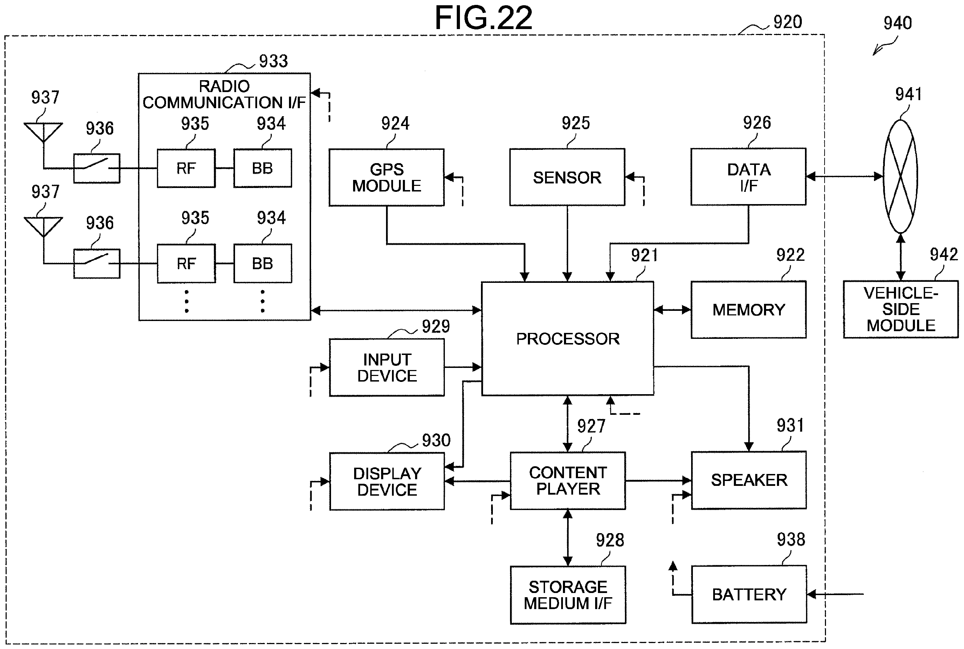

FIG. 22 is a block diagram illustrating an example of a schematic configuration of a car navigator 920 to which the techniques according to the present disclosure are applicable. The car navigator 920 includes a processor 921, memory 922, a Global Positioning System (GPS) module 924, a sensor 925, a data interface 926, a content player 927, a storage medium interface 928, an input device 929, a display device 930, a speaker 931, a radio communication interface 933, one or more antenna switches 936, one or more antennas 937, and a battery 938.

The processor 921 may be a CPU or SoC, for example, and controls the navigation function and other functions of the car navigator 920. The memory 922 includes RAM and ROM and stores programs to be executed by the processor 921, and data.

The GPS module 924 measures the position (including latitude, longitude, and altitude) of the car navigator 920 using GPS signals received from GPS satellites. The sensor 925 can include a group of sensors such as a gyro sensor, a geomagnetic sensor, and a barometric pressure sensor, for example. The data interface 926 is connected to an in-vehicle network 941 via a terminal (not illustrated), for example, and acquires data generated on the vehicle side such as vehicle speed data.

The content player 927 plays pieces of content stored on a storage medium (for example, a CD or DVD) inserted into the storage medium interface 928. The input device 929 includes a touch sensor that detects a touch on the screen of the display device 930, a button, or a switch, for example, and receives an input of operation or information from the user. The display device 930 includes a screen such as an LCD or OLED display, and displays an image of a navigation function or a content to be played. The speaker 931 outputs the sound of the navigation function or the content to be played.

The radio communication interface 933 supports a cellular communication scheme such as LTE or LTE-Advanced and executes radio communication. The radio communication interface 933 can typically include a BB processor 934, an RF circuit 935, or the like. The BB processor 934 may perform, for example, encoding/decoding, modulation/demodulation, and multiplexing/demultiplexing, and performs various signal processing for radio communication. The RF circuit 935 may include a mixer, a filter, an amplifier, or the like, and transmits and receives radio signals via the antenna 937. The radio communication interface 933 may be a one-chip module integrating the BB processor 934 and the RF circuit 935. The radio communication interface 933 may include a plurality of BB processors 934 and a plurality of RF circuits 935 as illustrated in FIG. 22. Although FIG. 22 illustrates an example in which the radio communication interface 933 includes a plurality of BB processors 934 and a plurality of RF circuits 935, the radio communication interface 933 may include a single BB processor 934 or a single RF circuit 935.

Furthermore, the radio communication interface 933 may support other types of radio communication schemes such as short-range radio communication scheme, near field radio communication scheme, or a wireless LAN scheme in addition to the cellular communication scheme. In that case, the radio communication interface 933 may include the BB processor 934 and the RF circuit 935 for each of the radio communication schemes.

Each of the antenna switches 936 switches the connection destination of the antenna 937 between a plurality of circuits included in the radio communication interface 933 (for example, circuits for different radio communication schemes).

Each of the antennas 937 has a single or a plurality of antenna elements (for example, a plurality of antenna elements constituting a MIMO antenna) and is used for transmitting and receiving radio signals by the radio communication interface 933. The car navigator 920 may have a plurality of antennas 937 as illustrated in FIG. 22. Although FIG. 22 illustrates an example in which the car navigator 920 has a plurality of antennas 937, the car navigator 920 may have a single antenna 937.

Furthermore, the car navigator 920 may include the antenna 937 for each of the radio communication schemes. In that case, the antenna switch 936 may be omitted from the configuration of the car navigator 920.

The battery 938 supplies power to individual blocks of the car navigator 920 illustrated in FIG. 22 via the power supply lines partially illustrated by the broken lines in the figure. In addition, the battery 938 stores electric power supplied from the vehicle side.

In the car navigator 920 illustrated in FIG. 22, one or more components (for example, at least one of the communication control unit 241, the information acquisition unit 243, or the notification unit 247) included in the control unit 240 described with reference to FIG. 6 may be implemented in the radio communication interface 933. Alternatively, at least a part of these components may be implemented in the processor 921. As an example, the car navigator 920 may be equipped with a module including a part (for example, the BB processor 934) or all of the radio communication interface 933 and/or the processor 921, and the module may be equipped with one or more of the above components. In this case, the module may store a program for causing the processor to function as the one or more components (in other words, a program for causing the processor to perform the operation of the one or more components) and may execute the program. As another example, a program causing the processor to function as one or more of the above components may be installed in the car navigator 920, and the radio communication interface 933 (for example, the BB processor 934) and/or the processor 921 may execute the program. As described above, the car navigator 920 or the above module may be provided as a device including the one or more components, and a program for causing the processor to function as the one or more components may be provided. Furthermore, a readable recording medium on which the above program is recorded may be provided.

Furthermore, in the car navigator 920 illustrated in FIG. 22, the radio communication unit 220 described with reference to FIG. 6, for example, may be implemented in the radio communication interface 933 (for example, the RF circuit 935). Furthermore, the antenna unit 210 may be implemented in the antenna 937. Furthermore, the storage unit 230 may be implemented in the memory 922.

Furthermore, the technique according to the present disclosure may be actualized as an in-vehicle system (or vehicle) 940 including one or more blocks of the car navigator 920 described above, the in-vehicle network 941, and a vehicle-side module 942. That is, the in-vehicle system (or vehicle) 940 may be provided as a device equipped with at least one of the communication control unit 241, the information acquisition unit 243, or the notification unit 247. The vehicle-side module 942 generates vehicle-side data such as vehicle speed, engine speed, or failure information, and outputs the generated data to the in-vehicle network 941.

<<6. Conclusion>>

As described above, in a system according to an embodiment of the present disclosure, the communication control device includes the acquisition unit, the determination unit, the communication control unit, and the notification unit. The acquisition unit acquires, from the communication device (for example, a base station), priority-related first information relating to secondary use of a second frequency band which is at least a part of a first frequency band allocated to a predetermined communication service. Based on the first information, the determination unit specifies the first priority associated with the communication device and determines the second priority associated with the first priority, to which the communication device belongs. The communication control unit controls the setting related to radio communication for the communication device based on the second priority. The notification unit notifies the communication device of second information according to the setting related to the radio communication.

With the above configuration, it is possible to implement spectrum sharing in a more preferable mode according to various conditions (for example, conditions for the communication device based on the second priority. The notification unit notifies the communication device of second information according to the setting related to the radio communication.

With the above configuration, it is possible to implement spectrum sharing in a more preferable mode according to various conditions (for example, conditions regarding QoS requirements, wireless applications, or the like) even in an environment where application in various use cases assumed in 5G NR can be assumed. That is, with the system according to an embodiment of the present disclosure, it is also possible to obtain an effect of further improving the use efficiency of limited radio resources.

Reference Signs List

| 1 | SYSTEM |
|---|---|
| 100 | COMMUNICATION DEVICE |
| 110 | ANTENNA UNIT |
| 120 | RADIO COMMUNICATION UNIT |
| 130 | NETWORK COMMUNICATION UNIT |
| 140 | STORAGE UNIT |
| 150 | CONTROL UNIT |
| 151 | COMMUNICATION CONTROL UNIT |
| 153 | INFORMATION ACQUISITION UNIT |
| 155 | NOTIFICATION UNIT |
| 200 | TERMINAL DEVICE |
| 210 | ANTENNA UNIT |
| 220 | RADIO COMMUNICATION UNIT |
| 230 | STORAGE UNIT |
| 240 | CONTROL UNIT |
| 241 | COMMUNICATION CONTROL UNIT |
| 243 | INFORMATION ACQUISITION UNIT |
| 247 | NOTIFICATION UNIT |
| 300 | COMMUNICATION CONTROL DEVICE |
| 301 | COMMUNICATION UNIT |
| 303 | STORAGE UNIT |
| 305 | CONTROL UNIT |
| 307 | COMMUNICATION PROTECTION PROCESSING UNIT |
| 311 | INTRA-TIER COORDINATION UNIT |
| 313 | NESTED TIER MANAGEMENT UNIT |
| 315 | INTER-NESTED TIER COORDINATION UNIT |
| 317 | INTRA-NESTED TIER COORDINATION UNIT |

319    INTRA-PARENT TIER COORDINATION UNIT

**Claims**

**1.** A communication control device (300) comprising:

an acquisition unit (319) configured to acquire, from a communication device, first information related to a priority relating to secondary use of a second frequency band which is at least a part of a first frequency band allocated to a predetermined communication service;
a determination unit (319) configured to perform, based on the first information, processes including specifying a first priority associated with the communication device and determining a second priority associated with the first priority, to which the communication device belongs;
a communication control unit (317) configured to control a setting related to radio communication for the communication device based on the second priority; and
a notification unit (317) configured to notify the communication device of second information according to the setting related to radio communication,
**characterized in that** the communication control unit (317) is configured to

- perform prioritization related to control of the setting related to radio communication between a plurality of communication devices based on the second priority specified for each of the plurality of communication devices associated with the first priority, and
- control the setting related to radio communication such that the higher the priority, as the second priority, being associated with the communication device, the higher priority for the use of the second frequency band will be given to the communication device and/or the more the communication device is to be protected against radio communication interference from other communication devices.

**2.** The communication control device according to any preceding claim,
wherein the communication control unit (317) is configured to control an area to be a control target of the setting related to radio communication according to the second priority, based on the second priority to which each of a plurality of communication devices belongs and based on information regarding an installation location of each of the plurality of communication devices.

**3.** The communication control device according to any preceding claim,
wherein the first information includes information according to a condition regarding use of the second frequency band.

**4.** The communication control device according to any preceding claim,
wherein the second information includes a communication parameter of radio communication using the second frequency band.

**5.** A method to be executed by a computer, the method comprising

acquiring, from a communication device, first information related to a priority relating to secondary use of a second frequency band which is at least a part of a first frequency band allocated to a predetermined communication service;
performing, based on the first information, processes including specifying a first priority associated with the communication device and determining a second priority associated with the first priority, to which the communication device belongs;
the method being **characterized by**:

performing prioritization related to control of the setting related to radio communication between a plurality of communication devices based on the second priority specified for each of the plurality of communication devices associated with the first priority;
controlling a setting related to radio communication for the communication device based on the second priority such that the higher the priority, as the second priority, being associated with the communication device, the higher priority for the use of the second frequency band will be given to the communication device and/or the more the communication device is to be protected against radio communication interference from other communication devices; and

notifying the communication device of second information according to the setting related to radio communication.

6. The method according to claim 5,

associating a plurality of mutually prioritized second priorities with part of first priorities among a plurality of first priorities which has been prioritized regarding secondary use of a second frequency band which is at least a part of a first frequency band allocated to a predetermined communication service.

7. The method according to claim 6,

wherein the plurality of second priorities is set according to a condition related to use of the second frequency band, in particular for individual licenses for use of the second frequency band associated with the first priority.

8. The method according to claim 7,

wherein prioritization between the plurality of second priorities is controlled in accordance with a condition related to use of the second frequency band.

9. The method according to claim 8,

wherein the prioritization between the plurality of second priorities is controlled such that the greater a constraint of the condition related to the use of the second frequency band, the higher the priority.

10. The method according to claim 9,

wherein the prioritization between the plurality of second priorities is controlled such that the higher communication quality required in a communication device associated with each of the plurality of second priorities or in a service provided by the communication device, the higher the priority or such that the lower an interference level acceptable in a communication device associated with each of the plurality of second priorities or in a service provided by the communication device, the higher the priority.

11. The method according to claim 9,

wherein the prioritization between the plurality of second priorities is controlled such that the more users present in a communication device associated with each of the plurality of second priorities or in a service provided by the communication device, the higher the priority or such that the higher urgency or commonality required in a communication device associated with each of the plurality of second priorities or in a service provided by the communication device, the higher the priority.

12. The method according to claim 9,

wherein the prioritization between the plurality of second priorities is controlled in accordance with a type of service provided by a communication device associated with each of the plurality of second priorities.

## Patentansprüche

1. Kommunikationssteuerungsvorrichtung (300), die Folgendes umfasst:

eine Erfassungseinheit (319), die so konfiguriert ist, dass sie von einer Kommunikationsvorrichtung erste Informationen erfasst, die sich auf eine Priorität in Bezug auf die sekundäre Nutzung eines zweiten Frequenzbandes beziehen, das zumindest ein Teil eines ersten Frequenzbandes ist, das einem vorbestimmten Kommunikationsdienst zugewiesen ist;

eine Bestimmungseinheit (319), die so konfiguriert ist, dass sie auf der Grundlage der ersten Informationen Prozesse durchführt, die das Spezifizieren einer ersten Priorität, die mit der Kommunikationsvorrichtung verknüpft ist, und das Bestimmen einer zweiten Priorität, die mit der ersten Priorität verknüpft ist, zu der die Kommunikationsvorrichtung gehört, umfassen;

eine Kommunikationssteuereinheit (317), die so konfiguriert ist, dass sie eine auf die Funkkommunikation bezogene Einstellung für die Kommunikationsvorrichtung basierend auf der zweiten Priorität steuert; und

eine Benachrichtigungseinheit (317), die so konfiguriert ist, dass sie die Kommunikationsvorrichtung über eine zweite Information gemäß der Einstellung bezüglich der Funkkommunikation benachrichtigt,

**dadurch gekennzeichnet, dass** die Kommunikationssteuereinheit (317) für Folgendes konfiguriert ist:

- Durchführen einer Priorisierung in Bezug auf die Steuerung der Einstellung, die sich auf die Funkkommunikation zwischen einer Vielzahl von Kommunikationsvorrichtungen bezieht, basierend auf der zweiten Priorität, die für jede der Vielzahl von Kommunikationsvorrichtungen spezifiziert ist, die mit der ersten Priorität verbunden ist, und

- Steuern der auf die Funkkommunikation bezogenen Einstellung dergestalt, dass der Kommunikationsvorrichtung eine umso höhere Priorität für die Nutzung des zweiten Frequenzbandes eingeräumt wird, je höher die Priorität ist, die der Kommunikationsvorrichtung als zweite Priorität zugeordnet ist, und/oder je mehr die Kommunikationsvorrichtung gegen Funkkommunikationsstörungen von anderen Kommunikationsvorrichtungen geschützt werden soll.

**2.** Kommunikationssteuerungsvorrichtung gemäß einem beliebigen vorhergehenden Anspruch, wobei die Kommunikationssteuereinheit (317) so konfiguriert ist, dass sie einen Bereich steuert, der ein Steuerziel der Einstellung ist, die sich auf die Funkkommunikation gemäß der zweiten Priorität bezieht, basierend auf der zweiten Priorität, zu der jede einer Vielzahl von Kommunikationsvorrichtungen gehört, und basierend auf Informationen bezüglich eines Installationsortes von jeder der Vielzahl von Kommunikationsvorrichtungen.

**3.** Kommunikationssteuerungsvorrichtung gemäß einem beliebigen vorhergehenden Anspruch, wobei die erste Information Informationen über einen Zustand bezüglich der Nutzung des zweiten Frequenzbandes enthält.

**4.** Kommunikationssteuerungsvorrichtung gemäß einem beliebigen vorhergehenden Anspruch, wobei die zweite Information einen Kommunikationsparameter der Funkkommunikation unter Verwendung des zweiten Frequenzbandes enthält.

**5.** Verfahren zur Ausführung durch einen Computer, wobei das Verfahren Folgendes umfasst:

Erfassen, von einer Kommunikationsvorrichtung, einer ersten Information, die sich auf eine Priorität in Bezug auf die sekundäre Nutzung eines zweiten Frequenzbandes bezieht, das zumindest ein Teil eines ersten Frequenzbandes ist, das einem vorbestimmten Kommunikationsdienst zugewiesen ist;

Durchführen, auf der Grundlage der ersten Informationen, von Prozessen einschließlich des Spezifizierens einer ersten Priorität, die mit der Kommunikationsvorrichtung verbunden ist, und des Bestimmens einer zweiten Priorität, die mit der ersten Priorität verbunden ist, zu der die Kommunikationsvorrichtung gehört; wobei das Verfahren durch Folgendes gekennzeichnet ist:

Durchführen einer Priorisierung in Bezug auf die Steuerung der Einstellung, die sich auf die Funkkommunikation zwischen einer Vielzahl von Kommunikationsvorrichtungen bezieht, basierend auf der zweiten Priorität, die für jede der Vielzahl von Kommunikationsvorrichtungen angegeben ist, die mit der ersten Priorität verbunden sind;

Steuern einer Einstellung, die sich auf die Funkkommunikation für die Kommunikationsvorrichtung bezieht, basierend auf der zweiten Priorität, so dass, je höher die Priorität als die zweite Priorität ist, die mit der Kommunikationsvorrichtung assoziiert ist, desto höhere Priorität für die Verwendung des zweiten Frequenzbandes wird der Kommunikationsvorrichtung gegeben und/oder desto mehr ist die Kommunikationsvorrichtung gegen Funkkommunikationsstörungen von anderen Kommunikationsvorrichtungen zu schützen; und

Benachrichtigen der Kommunikationsvorrichtung über eine zweite Information gemäß der Einstellung für die Funkkommunikation.

**6.** Verfahren nach Anspruch 5, Zuordnen einer Vielzahl von gegenseitig priorisierten zweiten Prioritäten zu einem Teil der ersten Prioritäten unter einer Vielzahl von ersten Prioritäten, die hinsichtlich der sekundären Nutzung eines zweiten Frequenzbandes priorisiert wurden, das zumindest ein Teil eines ersten Frequenzbandes ist, das einem vorbestimmten Kommunikationsdienst zugewiesen wurde.

**7.** Verfahren nach Anspruch 6, wobei die Vielzahl von zweiten Prioritäten entsprechend einer Bedingung in Bezug auf die Nutzung des zweiten Frequenzbandes festgelegt werden, insbesondere für einzelne Lizenzen zur Nutzung des zweiten Frequenzbandes, die der ersten Priorität zugeordnet sind.

**8.** Verfahren nach Anspruch 7,
wobei die Priorisierung zwischen der Vielzahl von zweiten Prioritäten in Übereinstimmung mit einer Bedingung gesteuert wird, die sich auf die Nutzung des zweiten Frequenzbandes bezieht.

**9.** Verfahren nach Anspruch 8,
wobei die Priorisierung zwischen der Vielzahl von zweiten Prioritäten so gesteuert wird, dass die Priorität umso höher ist, je größer eine Einschränkung der Bedingung in Bezug auf die Verwendung des zweiten Frequenzbandes ist.

**10.** Verfahren nach Anspruch 9,
wobei die Priorisierung zwischen der Vielzahl von zweiten Prioritäten so gesteuert wird, dass die Priorität umso höher ist, je höher die Kommunikationsqualität ist, die in einer Kommunikationsvorrichtung, die jeder der Vielzahl von zweiten Prioritäten zugeordnet ist, oder in einem von der Kommunikationsvorrichtung bereitgestellten Dienst erforderlich ist, oder dass die Priorität umso höher ist, je niedriger ein Interferenzpegel ist, der in einer Kommunikationsvorrichtung, die jeder der Vielzahl von zweiten Prioritäten zugeordnet ist, oder in einem von der Kommunikationsvorrichtung bereitgestellten Dienst akzeptabel ist.

**11.** Verfahren nach Anspruch 9,
wobei die Priorisierung zwischen der Vielzahl von zweiten Prioritäten so gesteuert wird, dass die Priorität umso höher ist, je mehr Benutzer in einer Kommunikationsvorrichtung, die jeder der mehreren zweiten Prioritäten zugeordnet ist, oder in einem von der Kommunikationsvorrichtung bereitgestellten Dienst vorhanden sind, oder dass die Priorität umso höher ist, je höher die Dringlichkeit oder Gemeinsamkeit ist, die in einer Kommunikationsvorrichtung, die jeder der Vielzahl von zweiten Prioritäten zugeordnet ist, oder in einem von der Kommunikationsvorrichtung bereitgestellten Dienst erforderlich ist.

**12.** Verfahren nach Anspruch 9,
wobei die Priorisierung zwischen der Vielzahl von zweiten Prioritäten in Übereinstimmung mit einer Art von Dienst gesteuert wird, der von einer Kommunikationsvorrichtung bereitgestellt wird, die mit jeder der Vielzahl von zweiten Prioritäten verbunden ist.

**Revendications**

**1.** Dispositif de commande de communication (300) comprenant :

une unité d'acquisition (319) configurée pour acquérir, à partir d'un dispositif de communication, de premières informations liées à une priorité relative à l'utilisation secondaire d'une seconde bande de fréquences qui est au moins une partie d'une première bande de fréquences attribuée à un service de communication prédéterminé ;
une unité de détermination (319) configurée pour exécuter, sur la base des premières informations, des processus comportant la spécification d'une première priorité associée au dispositif de communication et la détermination d'une seconde priorité associée à la première priorité, à laquelle appartient le dispositif de communication ;
une unité de commande de communication (317) configurée pour commander un réglage lié à la communication radio pour le dispositif de communication sur la base de la seconde priorité ; et
une unité de notification (317) configurée pour notifier au dispositif de communication de secondes informations en fonction du réglage lié à la communication radio,
**caractérisé en ce que**
l'unité de commande de communication (317) est configurée pour

- effectuer une priorisation liée à la commande du réglage lié à la communication radio entre une pluralité de dispositifs de communication sur la base de la seconde priorité spécifiée pour chacun de la pluralité de dispositifs de communication associés à la première priorité, et
- commander le réglage lié à la communication radio de telle sorte que plus la priorité, en tant que seconde priorité, associée au dispositif de communication, est élevée, plus la priorité donnée au dispositif de communication pour l'utilisation de la seconde bande de fréquences est élevée et/ou plus le dispositif de communication doit être protégé contre les brouillages de radiocommunication provenant d'autres dispositifs de communication.

**2.** Dispositif de commande de communication selon une quelconque revendication précédente,
dans lequel l'unité de commande de communication (317) est configurée pour commander une zone afin qu'elle soit une cible de commande du réglage lié à la communication radio selon la seconde priorité, sur la base de la seconde priorité à laquelle appartient chacun d'une pluralité de dispositifs de communication et sur la base d'informations concernant un emplacement d'installation de chacun de la pluralité de dispositifs de communication.

**3.** Dispositif de commande de communication selon une quelconque revendication précédente,
dans lequel les premières informations comportent des informations selon une condition concernant l'utilisation de la seconde bande de fréquences.

**4.** Dispositif de commande de communication selon une quelconque revendication précédente,
dans lequel les secondes informations comportent un paramètre de communication radio utilisant la seconde bande de fréquences.

**5.** Procédé devant être exécuté par un ordinateur, le procédé comprenant

l'acquisition, à partir d'un dispositif de communication, de premières informations liées à une priorité relative à l'utilisation secondaire d'une seconde bande de fréquences qui est au moins une partie d'une première bande de fréquences attribuée à un service de communication prédéterminé ;
l'exécution, sur la base des premières informations, de processus comportant la spécification d'une première priorité associée au dispositif de communication et la détermination d'une seconde priorité associée à la première priorité, à laquelle appartient le dispositif de communication ;
le procédé étant **caractérisé par** :

l'exécution d'une priorisation liée à la commande du réglage lié à la communication radio entre une pluralité de dispositifs de communication sur la base de la seconde priorité spécifiée pour chacun de la pluralité de dispositifs de communication associés à la première priorité ; et
la commande d'un réglage lié à la communication radio pour le dispositif de communication sur la base de la seconde priorité de telle sorte que plus la priorité, en tant que seconde priorité, associée au dispositif de communication, est élevée, plus la priorité donnée au dispositif de communication pour l'utilisation de la seconde bande de fréquences est élevée et/ou plus le dispositif de communication doit être protégé contre les interférences de radiocommunication provenant d'autres dispositifs de communication ; et
la notification au dispositif de communication de secondes informations selon le réglage lié à la communication radio.

**6.** Procédé selon la revendication 5,
associer une pluralité de secondes priorités mutuellement priorisées à une partie de premières priorités parmi une pluralité de premières priorités qui ont été priorisées concernant l'utilisation secondaire d'une seconde bande de fréquences qui est au moins une partie d'une première bande de fréquences attribuée à un service de communication prédéterminé.

**7.** Procédé selon la revendication 6,
dans lequel la pluralité de secondes priorités est fixée en fonction d'une condition liée à l'utilisation de la seconde bande de fréquences, en particulier pour des licences individuelles pour l'utilisation de la seconde bande de fréquences associée à la première priorité.

**8.** Procédé selon la revendication 7,
dans lequel l'ordre de priorité entre la pluralité de secondes priorités est commandé en fonction d'une condition liée à l'utilisation de la seconde bande de fréquences.

**9.** Procédé selon la revendication 8,
dans lequel l'ordre de priorité entre la pluralité de secondes priorités est commandé de telle sorte que plus une contrainte de la condition liée à l'utilisation de la seconde bande de fréquences est importante, plus la priorité est élevée.

**10.** Procédé selon la revendication 9,
dans lequel l'ordre de priorité entre la pluralité de secondes priorités est commandé de telle sorte que plus la qualité de communication requise dans un dispositif de communication associé à chacune de la pluralité de secondes priorités ou dans un service fourni par le dispositif de communication est élevée, plus la priorité est élevée, ou de telle sorte que plus le niveau de brouillage acceptable dans un dispositif de communication associé à chacune des secondes priorités ou dans un service fourni par le dispositif de communication est faible, plus la priorité est élevée.

11. Procédé selon la revendication 9,
dans lequel l'ordre de priorité entre la pluralité de secondes priorités est commandé de telle sorte que plus il y a d'utilisateurs présents dans un dispositif de communication associé à chacune des secondes priorités ou dans un service fourni par le dispositif de communication, plus la priorité est élevée, ou de telle sorte que plus l'urgence ou la communauté requise dans un dispositif de communication associé à chacune des secondes priorités ou dans un service fourni par le dispositif de communication est élevé, plus la priorité est élevée.

12. Procédé selon la revendication 9,
dans lequel l'ordre de priorité entre la pluralité de secondes priorités est commandé en fonction d'un type de service fourni par un dispositif de communication associé à chacune de la pluralité de secondes priorités.

# FIG.1

# FIG.2

EP 3 937 527 B1

# FIG.3

300-1

300-2

# FIG.4

(MASTER)

300-1

300-2

(SLAVE)

300-3

(SLAVE)

# FIG.5

110

100

120 RADIO COMMUNICA-TION UNIT

150 CONTROL UNIT

151 COMMUNICA-TION CONTROL UNIT

130 NETWORK COMMUNICA-TION UNIT

153 INFORMATION ACQUISITION UNIT

155 NOTIFICATION UNIT

140 STORAGE UNIT

# FIG.6

# FIG.7

# FIG.8

GENERAL AUTHORIZED ACCESS TIER
General Authorized Access (GAA) Tier

Nested-Tier 1

Nested-Tier 2

Nested-Tier 3

⋮

Nested-Tier X

# FIG.9

GENERAL AUTHORIZED ACCESS TIER
General Authorized Access (GAA) Tier

Nested-Tier 1: Acceptable Interference = −144dBm/10MHz

Nested-Tier 2: Acceptable Interference = −135dBm/10MHz

Nested-Tier 3: Acceptable Interference = −130dBm/10MHz

⋮

Nested-Tier X: Acceptable Interference = −96dBm/10MHz

# FIG.10

GENERAL AUTHORIZED ACCESS TIER
General Authorized Access (GAA) Tier

Nested-Tier 1: Throughput

Nested-Tier 2: SINR

Nested-Tier 3: Acceptable Interference

⋮

Nested-Tier X: Coverage size

# FIG.11

GENERAL AUTHORIZED ACCESS TIER
General Authorized Access (GAA) Tier

Nested-Tier 1: Mission Critical

Nested-Tier 2: Public Safety

Nested-Tier 3: V2X

⋮

Nested-Tier X: Mobile Broadband

# FIG.12

# FIG.13

300

COMMUNICATION CONTROL DEVICE
(SAS : Spectrum Access System)

301

COMMUNICATION UNIT

305

CONTROL UNIT

307

COMMUNICATION PROTECTION
PROCESSING UNIT
(Higher Tier Protection Function)

303

STORAGE UNIT
(Data Repository Function)

311

INTRA-TIER COORDINATION
UNIT
(Intra-Tier Coordination Function)

# FIG.14

311

INTRA-TIER COORDINATION UNIT
(Intra-Tier Coordination Function)

313

NESTED TIER MANAGEMENT
UNIT
(Nested Tier Management Function)

315

INTER-NESTED TIER
COORDINATION UNIT
(Inter-Nested Tier Coordination
Function)

317

INTRA-NESTED TIER
COORDINATION UNIT
(Intra-Nested Tier Coordination
Function)

319

INTRA-PARENT TIER
COORDINATION UNIT
(Intra-Parent Tier Coordination
Function)

# FIG.15

N101

~300a

~301

COMMUNICATION UNIT

~321

CONTROL UNIT

~307

COMMUNICATION
PROTECTION
PROCESSING UNIT
(Higher Tier Protection
Function)

~319

INTRA-PARENT TIER
COORDINATION UNIT
(Intra-Parent Tier
Coordination Function)

~303

STORAGE UNIT
(Data Repository Function)

COMMUNICATION
CONTROL DEVICE
(SAS : Spectrum Access System)

~510

~511

COMMUNICATION UNIT

~513

CONTROL UNIT

~313

NESTED TIER
MANAGEMENT UNIT
(Nested Tier
Management Function)

~315

INTER-NESTED TIER
COORDINATION UNIT
(Inter-Nested Tier
Coordination Function)

~317

INTRA-NESTED TIER
COORDINATION UNIT
(Intra-Nested Tier
Coordination Function)

NESTED TIER
COORDINATION SYSTEM
(Nested Tier Coordination System)

# FIG.16

N101

**300a**

**301** COMMUNICATION UNIT

**321** CONTROL UNIT

**307** COMMUNICATION PROTECTION PROCESSING UNIT (Higher Tier Protection Function)

**319** INTRA-PARENT TIER COORDINATION UNIT (Intra-Parent Tier Coordination Function)

**303** STORAGE UNIT (Data Repository Function)

COMMUNICATION CONTROL DEVICE (SAS : Spectrum Access System)

**510**

**511** COMMUNICATION UNIT

**513** CONTROL UNIT

**313** NESTED TIER MANAGEMENT UNIT (Nested Tier Management Function)

**315** INTER-NESTED TIER COORDINATION UNIT (Inter-Nested Tier Coordination Function)

**317** INTRA-NESTED TIER COORDINATION UNIT (Intra-Nested Tier Coordination Function)

NESTED TIER COORDINATION SYSTEM (Nested Tier Coordination System)

**550**

**551** COMMUNICATION CONTROL UNIT (Control Function)

**553** INFORMATION TRANSLATION UNIT (Translation Function)

COMMUNICATION DEVICE (Comm. Device)

**550**

**551** COMMUNICATION CONTROL UNIT (Control Function)

**553** INFORMATION TRANSLATION UNIT (Translation Function)

COMMUNICATION DEVICE (Comm. Device)

EP 3 937 527 B1

FIG.17

N101

550a
551 COMMUNICATION CONTROL UNIT (Control Function)
COMMUNICATION DEVICE (Comm. Device)

550a
551 COMMUNICATION CONTROL UNIT (Control Function)
COMMUNICATION DEVICE (Comm. Device)

· · · · · ·

570
553 INFORMATION TRANSLATION UNIT (Translation Function)
INTERMEDIATE DEVICE

510
511 COMMUNICATION UNIT
513 CONTROL UNIT
313 NESTED TIER MANAGEMENT UNIT (Nested Tier Management Function)
315 INTER-NESTED TIER COORDINATION UNIT (Inter-Nested Tier Coordination Function)
317 INTRA-NESTED TIER COORDINATION UNIT (Intra-Nested Tier Coordination Function)
NESTED TIER COORDINATION SYSTEM (Nested Tier Coordination System)

300a
301 COMMUNICATION UNIT
321 CONTROL UNIT
307 COMMUNICATION PROTECTION PROCESSING UNIT (Higher Tier Protection Function)
319 INTRA-PARENT TIER COORDINATION UNIT (Intra-Parent Tier Coordination Function)
303 STORAGE UNIT (Data Repository Function)
COMMUNICATION CONTROL DEVICE (SAS : Spectrum Access System)

# FIG.18

700

704

NETWORK I/F

705

706

703

STORAGE

702

MEMORY

701

PROCESSOR

# FIG.19

FIG.20

# FIG.21

EP 3 937 527 B1

**FIG.22**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015534372 A
- WO 2014047235 A2
- JP 2016019134 A
- JP 2017517218 A

**Non-patent literature cited in the description**

- CBRS Coexistence Technical Specification V1.0.0. CBRSA-TS-2001. CBRS Alliance, 01 February 2018